# EUROPEAN PATENT APPLICATION

(11) **EP 4 755 613 A1**
(43) Date of publication of application: **10.06.2026**
(21) Application number: 25199752.4
(22) Date of filing: 02.09.2025
(51) Int. Cl.: B29C 70/30, B29C 70/54, B29D 99/00, B32B 5/02, B32B 27/08, B32B 27/12, B64C 1/06, B64C 1/12, D03D 15/267

(54) **COMPOSITE FUSELAGE FRAMES AND METHODS OF FABRICATING FRAME FILLERS AND COMPOSITE FUSELAGE FRAMES FOR AIRCRAFT**

(30) Priority: 09.12.2024 US 202418973430
(71) Applicant: The Boeing Company, Arlington, VA 22202 (US)
(72) Inventor: GERTINO, Jordan J., Arlington, 22202 (US); GALUSKA, Michael D., Arlington, 22202 (US); MUNSON, Matthew A., Arlington, 22202 (US)
(74) Representative: Boult Wade Tennant LLP

(57) **Abstract**

A composite fuselage frame for an aircraft includes a web and a shear tie foot. The web includes a width and a first thickness. The web forms an arc between first and second ends in relation to the fuselage. The width extends from the outer side in relation to a skin on the fuselage to an inner side. The shear tie foot is disposed on the outer side of the web between first and second mouse holes and projects from the first thickness of the web. The shear tie foot has a second thickness that extends along the skin between first and second stringers. The second thickness of the shear tie foot is defined by the first thickness and second polymer matrix composite layers formed by first material polymer matrix composite plies that provide a frame filler integrated with second material polymer matrix composite plies of the first thickness.

## Description

### FIELD

The present disclosure relates generally to composite fuselage frames for aircraft and, particularly, to composite fuselage frames with frame fillers integrated therein. Various methods are disclosed for fabricating laminates of the frame fillers and integrating the laminates into the layup of the composite fuselage frames. Various additional methods are disclosed for integrating the layup of the frame fillers with the layup of the composite fuselage frames.

### BACKGROUND

Current frame fillers are hand placed onto the fuselage skin and co-cured with the skin. For example, there are six total fuselage sections that require these frame fillers. The current frame fillers are co-cured with the fuselage skin laminate and then the separately-fabricated frame is fastened to the skin over the frame fillers and stringers on the skin between the frame fillers.

Accordingly, those skilled in the art continue with research and development efforts to reduce fabrication time and weight for fuselage barrel sections of aircraft in relation to skins, frame fillers and fuselage frames that provide support for the skins.

### SUMMARY

Disclosed are examples of composite fuselage frames, methods of fabricating frame fillers for composite fuselage frames, methods of fabricating composite fuselage frames for aircraft and methods of fabricating fuselage barrel sections for aircraft. The following is a non-exhaustive list of examples, which may or may not be claimed, of the subject matter according to the present disclosure.

In some examples, the disclosed composite fuselage frame for an aircraft includes an inner chord, a web and a shear tie foot. The inner chord is a flange opposite the shear tie foot.

In certain other examples, the disclosed composite fuselage frame for an aircraft includes a web and a shear tie foot. The web includes a width and a first predetermined thickness. The web forms an arc between a first end and a second end in relation to a fuselage of the aircraft. The width extending from an outer side in relation to a skin on the fuselage to an inner side. The shear tie foot disposed on the outer side of the web between a first mouse hole and a second mouse hole and projecting from the first predetermined thickness of the web. The shear tie foot having a second predetermined thickness that extends along the skin of the aircraft between a first stringer and a second stringer. The second predetermined thickness of the shear tie foot is defined by the first predetermined thickness and a second plurality of second polymer matrix composite layers formed by a plurality of first material polymer matrix composite plies that provide a frame filler integrated with a plurality of second material polymer matrix composite plies of the first predetermined thickness.

In some examples, the disclosed method of fabricating a frame filler for a composite fuselage frame includes: (a) laying up a plurality of first material polymer matrix composite plies on a first layup tool for the frame filler to provide a first stack of first material polymer matrix composite plies on a first top surface of the first layup tool; and (b) forming the first stack.

In some examples, the disclosed method of fabricating a composite fuselage frame for an aircraft includes: (a) laying up a plurality of first material polymer matrix composite plies on a first portion of a top surface of a layup tool for the composite fuselage frame at a predetermined location to form a first stack of first material polymer matrix composite plies, the predetermined location being associated with a frame filler in relation to a shear tie foot of the composite fuselage frame; (b) laying up a plurality of second material polymer matrix composite plies over the first material polymer matrix composite plies and a second portion of the top surface of the layup tool to provide a second stack of second material polymer matrix composite plies; and (c) forming the second stack and the first stack.

In some examples, the disclosed method of fabricating a fuselage barrel section of an aircraft includes: (a) receiving a skin with at least a first stringer and a second stringer on an interior surface of the skin in a manufacturing cell, the skin with the first stringer and the second stringer having previously been fabricated and hardened; (b) mounting the skin on a fabrication tool in the manufacturing cell; (c) receiving a composite fuselage frame with a frame filler integrated therein at the manufacturing cell, the composite fuselage frame having previously been fabricated and hardened; and (d) installing the composite fuselage frame on the interior surface of the skin over the first stringer and the second stringer.

Other examples of the disclosed composite fuselage frames, methods of fabricating frame fillers for composite fuselage frames, methods of fabricating composite fuselage frames for aircraft and methods of fabricating fuselage barrel sections for aircraft will become apparent from the following detailed description, the accompanying drawings and the appended claims.

### BRIEF DESCRIPTION OF THE DRAWINGS

Fig. 1 is a perspective view of an example of a composite fuselage frame with an integrated frame filler on a shear tie foot;
Fig. 2 is a perspective view of an example of an aircraft;
Fig. 3 is a perspective view of an example of a partially assembled fuselage barrel section;
Fig. 4 is a cross-sectional side view of another example of a composite fuselage frame;
Fig. 5 is another cross-sectional side view of the composite fuselage frame of Fig. 4 showing polymer matrix composite layers;
Fig. 6 is an exploded front view showing an example of polymer matrix composite layers and outer protective fiberglass layers in yet another example of a composite fuselage frame;
Fig. 7 is an exploded side view showing the polymer matrix composite layers and outer protective fiberglass layers in the composite fuselage frame of Fig. 6;
Fig. 8 is a side view of the composite fuselage frame of Figs. 4 and 5 showing an example of a frame filler (in phantom lines) integrated within the composite fuselage frame;
Fig. 9 is a flow diagram of an example of a method of fabricating a frame filler for a composite fuselage frame;
Fig. 10 is an exploded front view showing an example of polymer matrix composite layers in an example of a frame filler for the composite fuselage frame of Figs. 4 and 5;
Fig. 11 is a front view of an example of a laminate of the frame filler of Fig. 10;
Fig. 12 is a top view of an example of a sheet of first material polymer matrix composite fabric;
Fig. 13, in combination with Fig. 9, is a flow diagram of another example of a method of fabricating a frame filler for a composite fuselage frame;
Fig. 14 is a rear view of an example of a layup tool upon which the laminate of the frame filler (in phantom lines) of Fig. 8 was placed and over which an example of a second material polymer matrix composite ply was overlaid;
Fig. 15 is an exploded side view of the layup tool of Fig. 14 showing the laminate of the frame filler (in phantom lines) and an example of a stack of second material polymer matrix composite plies overlaid on the frame filler;
Fig. 16 is a top view of an example of a sheet of second material polymer matrix composite tape;
Fig. 17, in combination with Figs. 9 and 13, is a flow diagram of yet another example of a method of fabricating a frame filler for a composite fuselage frame;
Fig. 18 is a side view of an example of a laminate of an example of a composite fuselage frame showing the laminate of the frame filler in Fig. 11 integrated within the composite fuselage frame;
Fig. 19, in combination with Figs. 9 and 13, is a flow diagram of still another example of a method of fabricating a frame filler for a composite fuselage frame;
Fig. 20 is an exploded side view of the layup tool of Fig. 14 showing an example of a second material polymer matrix composite ply overlaid on the layup tool and awaiting placement of the frame filler;
Fig. 21, in combination with Figs. 9 and 13, is a flow diagram of still yet another example of a method of fabricating a frame filler for a composite fuselage frame;
Fig. 22, in combination with Figs. 9 and 13, is a flow diagram of another example of a method of fabricating a frame filler for a composite fuselage frame;
Fig. 23, in combination with Fig. 9, is a flow diagram of yet another example of a method of fabricating a frame filler for a composite fuselage frame;
Fig. 24, in combination with Figs. 9 and 23, is a flow diagram of still another example of a method of fabricating a frame filler for a composite fuselage frame;
Fig. 25, in combination with Figs. 9 and 23, is a flow diagram of still yet another example of a method of fabricating a frame filler for a composite fuselage frame;
Fig. 26, in combination with Figs. 9 and 23, is a flow diagram of another example of a method of fabricating a frame filler for a composite fuselage frame;
Fig. 27, in combination with Figs. 9, 23 and 25, is a flow diagram of yet another example of a method of fabricating a frame filler for a composite fuselage frame;
Fig. 28 is a flow diagram of an example of a method of fabricating a composite fuselage frame for an aircraft;
Fig. 29, in combination with Fig. 28, is a flow diagram of yet another example of a method of fabricating a composite fuselage frame for an aircraft;
Fig. 30, in combination with Fig. 28, is a flow diagram of still another example of a method of fabricating a composite fuselage frame for an aircraft;
Fig. 31, in combination with Fig. 28, is a flow diagram of still yet another example of a method of fabricating a composite fuselage frame for an aircraft;
Fig. 32, in combination with Fig. 28, is a flow diagram of another example of a method of fabricating a composite fuselage frame for an aircraft;
Figs. 33 and 34 provide flow diagrams of an example of a method of fabricating a fuselage barrel section for an aircraft that includes fabricating a composite fuselage frame;
Fig. 35, in combination with Figs. 33 and 34, is a flow diagram of another example of a method of fabricating a fuselage barrel section for an aircraft that includes fabricating a composite fuselage frame;
Fig. 36 is a block diagram of aircraft production and service methodology that includes composite fuselage frames with frame fillers integrated therein fabricated using one or more of the examples of methods disclosed herein;
Fig. 37 is a schematic illustration of an aircraft that incorporates composite fuselage frames with frame fillers integrated therein fabricated using one or more of the examples of methods disclosed herein;
Fig. 38, in combination with Figs. 28 and 30, is a flow diagram of yet another example of a method of fabricating a composite fuselage frame for an aircraft;
Fig. 39 is a flow diagram of an example of the forming of the second stack and the first stack in the method 2800 of Fig. 28;
Fig. 40 is a side view of an example of a forming tool for a composite fuselage frame;
Fig. 41 is a side view of an example of a compacting tool for a composite fuselage frame;
Fig. 42 is a flow diagram of another example of the forming of the second stack and the first stack in Fig. 28;
Fig. 43 is a flow diagram of an example of the forming of the first stack in Fig. 9;
Fig. 44 is a side view of an example of a forming tool for a frame filler;
Fig. 45 is a side view of an example of a compacting tool for a frame filler;
Fig. 46 is a flow diagram of another example of the forming of the first stack in Fig. 9;
Fig. 47 is a flow diagram of an example of the forming of the second stack and the first laminate in Fig. 13;
Fig. 48 is a flow diagram of another example of the forming of the second stack and the first laminate in Fig. 13;
Fig. 49 is a flow diagram of an example of the forming of the base portion and the first laminate in Fig. 23;
Fig. 50 is a flow diagram of another example of the forming of the base portion and the first laminate in Fig. 23;
Fig. 51 is a flow diagram of an example of the forming of the second stack and the first stack in Fig. 34; and
Fig. 52 is a flow diagram of another example of the forming of the second stack and the first stack in Fig. 34.

### DETAILED DESCRIPTION

The various examples of composite fuselage frames 100, methods 900, 1300, 1700, 1900, 2100, 2200, 2300, 2400, 2500, 2600, 2700 of fabricating frame fillers 802 for composite fuselage frames 100, methods 2800, 2900, 3000, 3100, 3200, 3800 of fabricating composite fuselage frames 100 for aircraft 200 and methods 3300, 3500 of fabricating fuselage barrel sections 310 for aircraft 200 disclosed herein provide techniques for integrating the frame filler 802 into a shear tie foot 114 of a composite fuselage frame 100 via clamped arc forming and co-curing the two components. This reduces the total number of fabricated components, overall process flow time and results in overall weight savings for the airplane. The frame fillers 802 are laid up prior to the forming of the composite fuselage frame 100 and are integrated into the first ply form on the tool. The remainder of the composite fuselage frame 100 is laid up normally and, when cured, the two components become one contiguous part. The frame fillers 802 can be formed with the first ply of the part with a minimal addition to the frame flow time but would be a significant reduction to the current skin co-cure flow time. This also reduces risk in the composite skin build and results in a weight savings from having rightsized frame fillers. Weight savings is achieved by right-sized reducing two inches (5 cm) of material per frame filler 802 for thousands of frame fillers 802 used per aircraft 200. For example, there may be six composite fuselage frames 100 sections that require integrated frame fillers 802. An advantage is moving the time/labor from the skin build to the smaller part feature build. This also reduces risk in the skin build since any defects in a composite fuselage frame 100 would result in a much lower scrap/rework cost. This enables a modified assembly method for joining the composite fuselage frame 100 to the fuselage 202 and modified methods for fabricating the composite fuselage frame 100.

The techniques disclosed herein combine features of two part which results in reduced process flow time and weight savings. The weight savings is due to the frame fillers 802 being right-sized. For example, current skin frame fillers may extend about an inch (2.5 cm) beyond the shear tie of the frame in either direction, whereas composite fuselage frames 100 in which frame fillers 802 are integrated would be right sized reducing two inches (5 cm) of material per frame filler for thousands of frame fillers 802 used per aircraft 200. Frame fillers 802, for example, can be hand stacked prior to forming the composite fuselage frame 100. The stack of plies, for example, can be BMS8-276 plain weave (PW) (or future BMS8-416 PW) material in a +/-45-degree orientation. This material is compatible with the frame resin and can be co-cured with the composite fuselage frame 100. The frame fillers 802 can be aligned into the first-to-be formed ply, for example, via optical laser template projection and vacuum compacted into the ply. Once this is complete, the first ply can be formed as normal for a one-piece frame using clamped arc forming. The rest of the frame forming process would not be impacted, and once cured, the parts would make up one contiguous composite fuselage frame 100 with integrated frame fillers 802 ready for install onto the skin 204 of the fuselage 202.

The frame fillers 802 are integrated with the composite fuselage frames 100 and fasten directly to the skin. The frame fillers 802 are co-cured with the composite fuselage frames 100 which is much different than any current process. In other words, current aircraft do not use a one-piece frame structure for a fuselage frame that includes an integrated frame filler for attachment onto the skin or any form of integrated frame filler within the frame for attachment to the skin. Once the frame filler 802 is laid into the plies for the composite fuselage frame 100 and co-cured, the frame filler 802 becomes a part of the composite fuselage frame 100. Pre-stack up, +/-45-degree ply orientation, OLT location onto the first ply, and clamped arc forming of the fiberglass/frame fillers/ and first ply all at once are also techniques that can be implements in any suitable combination. The integrated frame filler design can be used for any other type of composite material or part builds for attaching frames to fuselages. For example, the integrated frame filler design can be used for composite airplane to reduce manufacturing risk, save time, weight and material over current processes and allows for different fuselage skin tooling and fabrication that may also result in time/quality benefits.

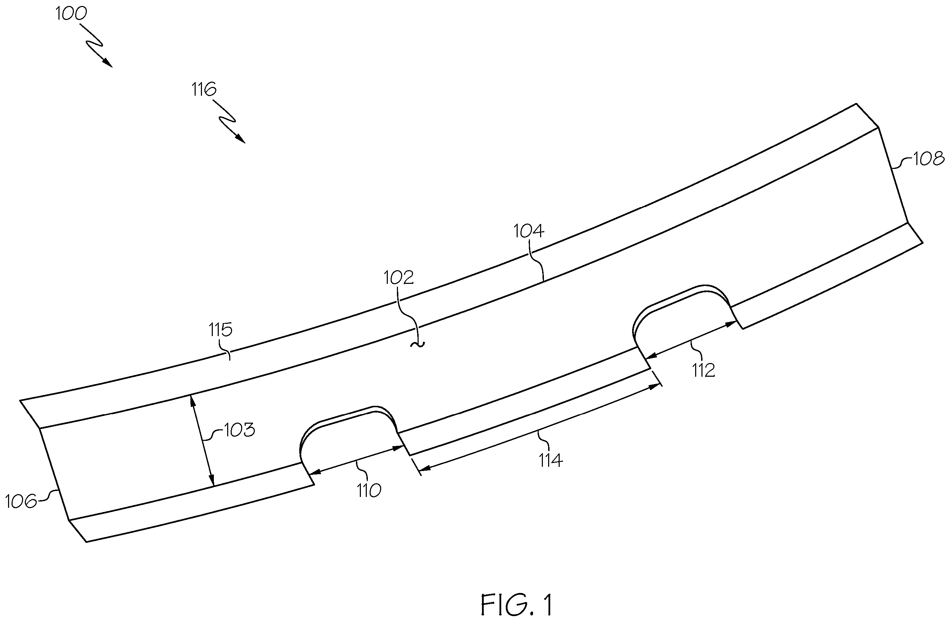

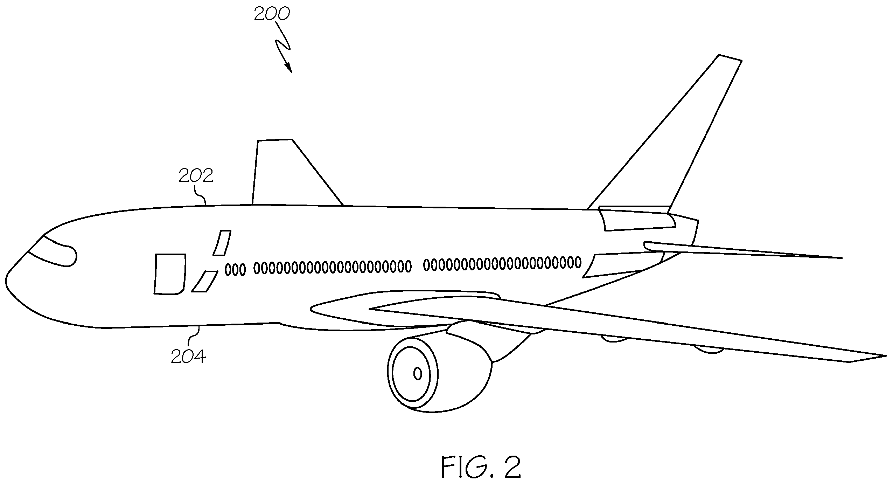

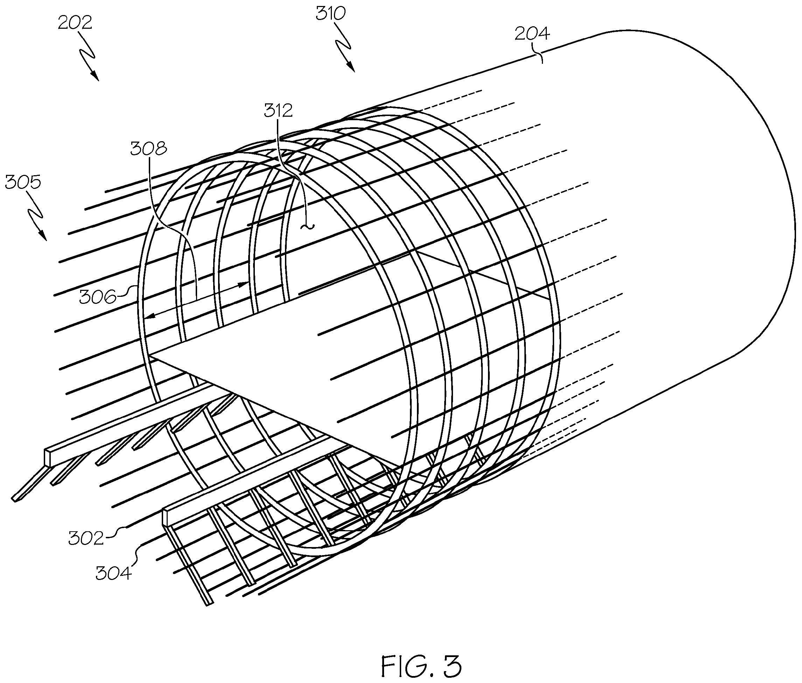

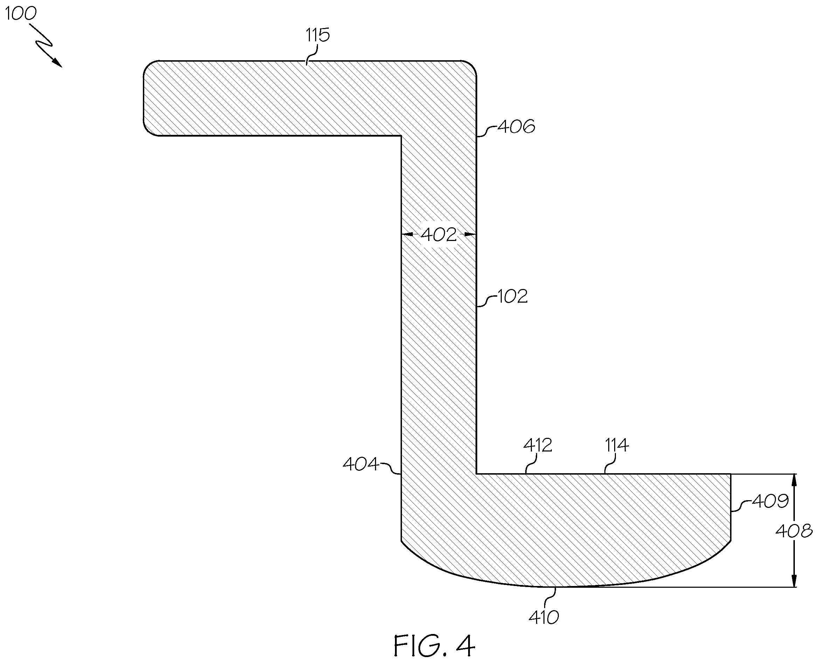

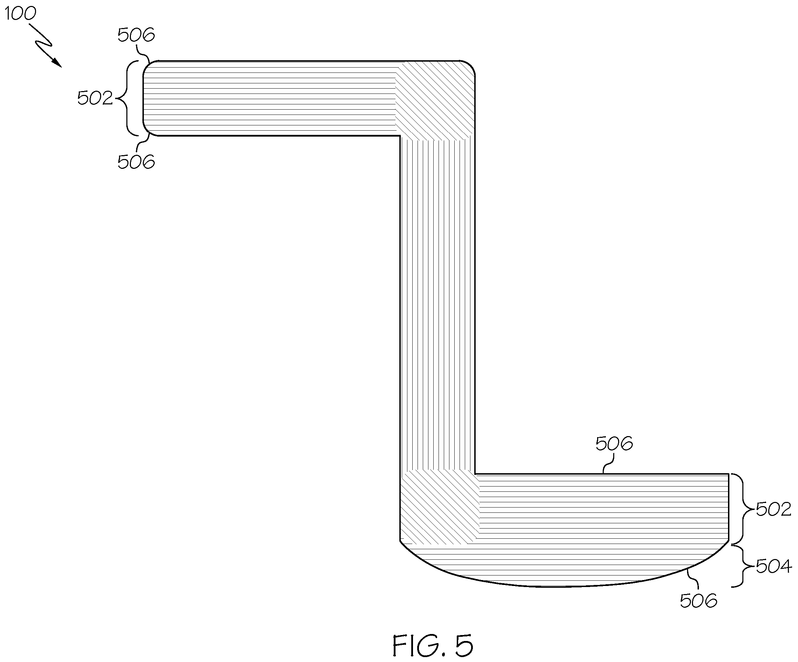

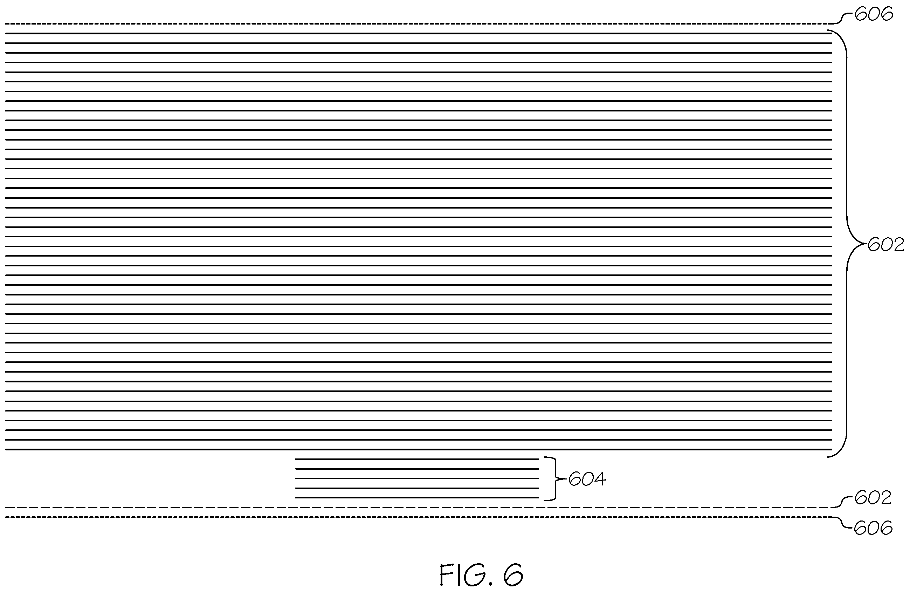

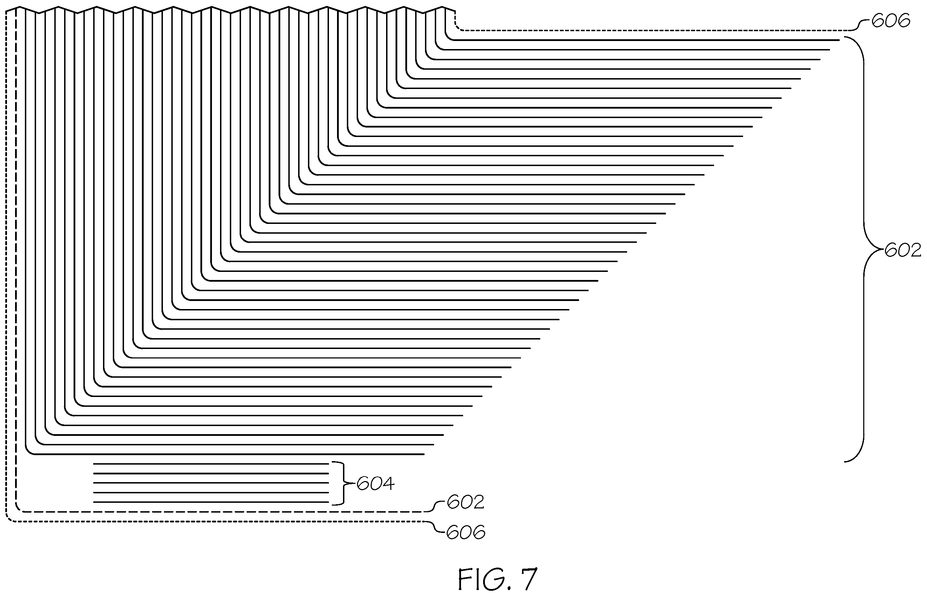

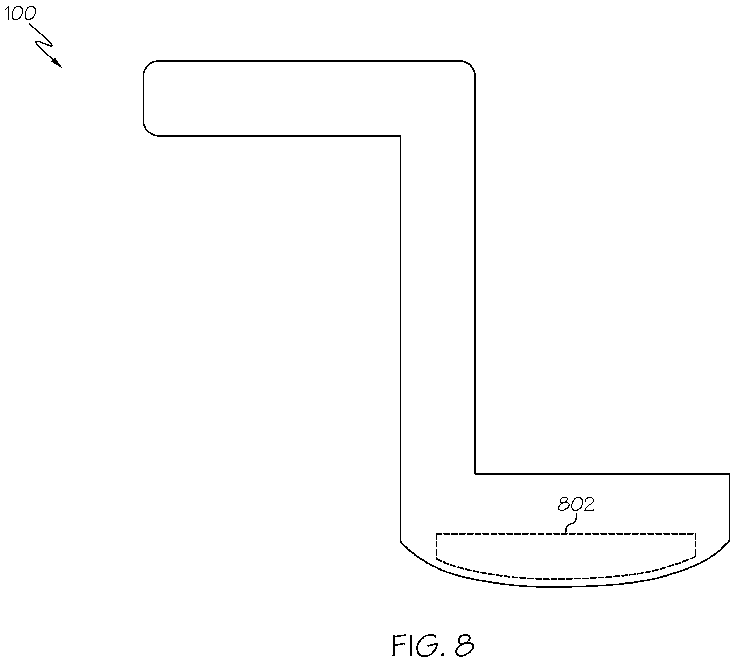

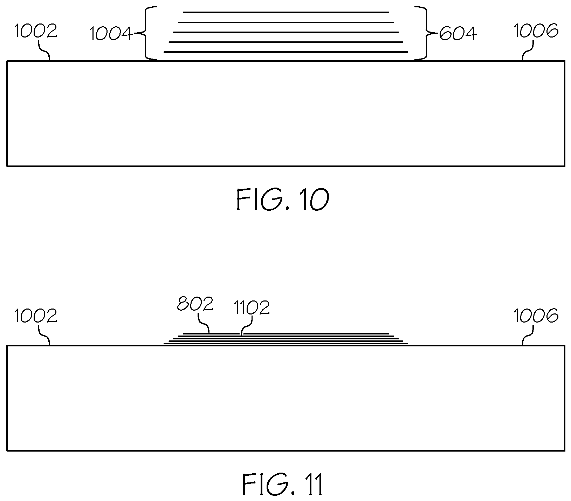

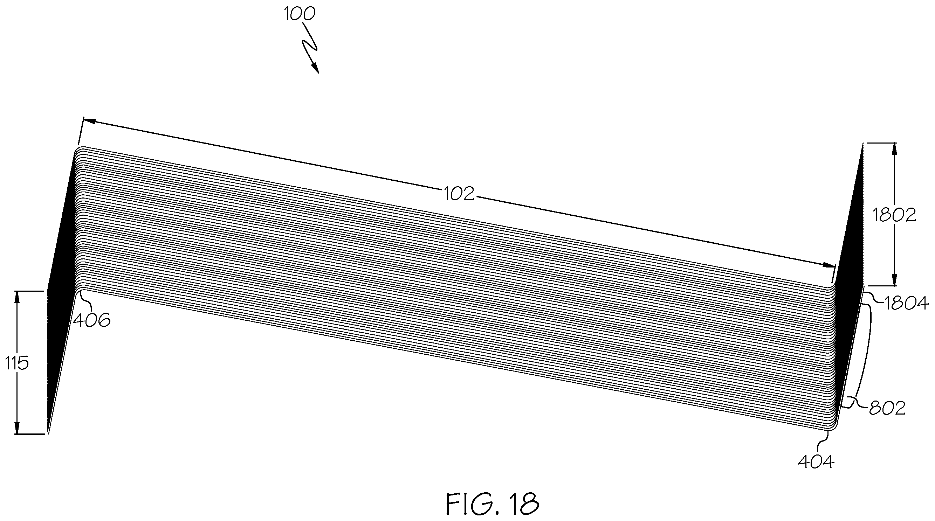

Referring generally to Figs. 1-8 and 18, by way of examples, the present disclosure is directed to a composite fuselage frame 100 for an aircraft 200. Fig. 1 is a perspective view of an example of the composite fuselage frame 100. Fig. 2 is a perspective view of an example of the aircraft 200. Fig. 3 is a perspective view of an example of a partially assembled fuselage barrel section 310. Fig. 4 is a cross-sectional side view of another example of the composite fuselage frame 100. Fig. 5 is another cross-sectional side view of the composite fuselage frame 100 of Fig. 4 showing polymer matrix composite layers 502, 504. Fig. 6 is an exploded front view showing an example of polymer matrix composite layers 502, 504 and outer protective fiberglass layers 506 in yet another example of the composite fuselage frame 100. Fig. 7 is an exploded side view showing the polymer matrix composite layers 502, 504 and outer protective fiberglass layers 506 in the composite fuselage frame 100 of Fig. 6. Fig. 8 is a side view of the composite fuselage frame 100 of Figs. 4 and 5 showing an example of a frame filler 802 (in phantom lines) integrated within the composite fuselage frame 100. Fig. 18 is a side view of an example of a laminate 1502 of an example of the composite fuselage frame 100 showing the laminate 1102 of the frame filler 802 in Fig. 11 integrated within the composite fuselage frame 100.

With reference again to 1-8 and 18, in one or more example, a composite fuselage frame 100 for an aircraft 200 includes a web 102 and a shear tie foot 114. The composite fuselage frame 100 may also include an inner chord 115 on an opposite side of the web 102 from the shear tie foot 114. The web 102 includes a width 103 and a first predetermined thickness 402. The web 102 forms an arc 104 between a first end 106 and a second end 108 in relation to a fuselage 202 of the aircraft 200. The width 103 extending from an outer side 404 in relation to a skin 204 on the fuselage 202 to an inner side 406. The shear tie foot 114 disposed on the outer side 404 of the web 102 between a first mouse hole 110 and a second mouse hole 112 and projecting from the first predetermined thickness 402 of the web 102. The shear tie foot 114 has a second predetermined thickness 408 that extends along the skin 204 of the aircraft 200 between a first stringer 302 and a second stringer 304. The second predetermined thickness 408 of the shear tie foot 114 is defined by the first predetermined thickness 402 and a second plurality of second polymer matrix composite layers 504 formed by a plurality of first material polymer matrix composite plies 604 that provide a frame filler 802 integrated with a plurality of second material polymer matrix composite plies 602 of the first predetermined thickness 402.

In certain other examples, the composite fuselage frame 100 also includes the first mouse hole 110 and the second mouse hole 112. The first mouse hole 110 disposed on the outer side 404 of the web 102 and sized to fit over the first stringer 302 on the skin 204. The second mouse hole 112 is spaced from the first mouse hole 110 on the outer side 404 of the web 102 and sized to fit over the second stringer 304 adjacent to the first stringer 302 on the skin 204 of the fuselage 202.

In still other examples, the composite fuselage frame 100 is configured to provide crosswise support 314 to an interior surface 312 of a skin 204 for a fuselage barrel section 310 with a plurality of stringers 305. The composite fuselage frame 100 spans the plurality of stringers 305. The composite fuselage frame 100 includes a plurality of shear tie feet 114 that extend toward the skin 204 between adjacent stringers 305. Each shear tie foot 114 has a frame filler 802 integrated therein during fabrication of the composite fuselage frame 100 such that the composite fuselage frame 100 includes a plurality of frame fillers 802 integrated within the plurality of shear tie feet 114.

In yet other examples, the composite fuselage frame 100 also includes a flange 1802 connected to the web 102 which in turn is connected to the shear tie foot 114. The shear tie foot 114 includes the frame filler 802 added to the flange 1802. The frame filler 802 being equal to a thickness of stringer flanges on the first stringer 302 and the second stringer 304. In still other examples of the composite fuselage frame 100, the first predetermined thickness 402 of the web 102 is defined by a first plurality of first polymer matrix composite layers 502 formed by the plurality of second material polymer matrix composite plies 602. In still yet other examples of the composite fuselage frame 100, the shear tie foot 114 extends from the web 102 to a distal end 409 of the shear tie foot 114 and an outer surface 410 of the shear tie foot 114 is configured to face the skin 204 and align with a corresponding portion of the skin 204. In certain other examples of the composite fuselage frame 100, the shear tie foot 114 extends from the first predetermined thickness 402 of the web 102 such that a side of the shear tie foot 114 is configured to face the skin 204 and to fit within an area defined by the first stringer 302, the second stringer 304 and a corresponding portion of the skin 204 between the first stringer 302 and the second stringer 304.

In yet other examples of the composite fuselage frame 100, the second material polymer matrix composite plies 602 include thermoset matrix composite plies, thermoplastic matrix composite plies or any other suitable unidirectional polymer matrix composite plies in any suitable combination. In still other examples of the composite fuselage frame 100, the second material polymer matrix composite plies 602 include unidirectional reinforcement fibers and polymer matrix material. In further examples, the unidirectional reinforcement fibers include carbon fibers, glass fibers, aramid fibers, natural fibers, polyetheretherketone fibers or any other suitable reinforcement fibers in any suitable combination. In other further examples, the polymer matrix material includes a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin, a polyetheretherketone resin or any other suitable polymer matrix material in any suitable combination.

In still yet other examples of the composite fuselage frame 100, the first material polymer matrix composite plies 604 include thermoset matrix composite plies, thermoplastic matrix composite plies or any other suitable woven polymer matrix composite plies in any suitable combination. In certain other examples of the composite fuselage frame 100, the first material polymer matrix composite plies 604 include a reinforcement fabric and polymer matrix material. In further examples, the reinforcement fabric includes a plain weave fabric, a 0/90-degree weave fabric, a 45-degree weave fabric or any other suitable woven reinforcement fabric in any suitable combination. In other further examples, the reinforcement fabric includes woven reinforcement fibers that are interwoven in at least two directions. In even further examples, the woven reinforcement fibers includes glass fibers, carbon fibers, aramid fibers, natural fibers, polyetheretherketone fibers or any other suitable reinforcement fibers in any suitable combination. In yet other further examples, the polymer matrix material includes a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin, a polyetheretherketone resin or any other suitable polymer matrix material in any suitable combination.

In yet other examples of the composite fuselage frame 100, the web 102 and the shear tie foot 114 also include outer protective fiberglass layers 506 extending between the first end 106 and the second end 108 of the web 102 and extending along an inner surface 412 and an outer surface 410 of the shear tie foot 114 between the first mouse hole 110 and the second mouse hole 112. The outer protective fiberglass layers 506 formed by outer protective fiberglass plies 606. In still other examples, the composite fuselage frame 100 also includes a one-piece section 116. In still yet other examples of the composite fuselage frame 100, multiple composite fuselage frames 100 form a segmented frame 306 for a slice 308 of the fuselage 202 of the aircraft 200.

Referring generally to Figs. 1-27, 40, 41 and 43-50, by way of examples, the present disclosure is directed to a method 900, 1300, 1700, 1900, 2100, 2200, 2300, 2400, 2500, 2600, 2700 of fabricating a frame filler 802 for a composite fuselage frame 100. Fig. 1 is a perspective view of an example of a composite fuselage frame 100. Fig. 2 is a perspective view of an example of the aircraft 200. Fig. 3 is a perspective view of an example of a partially assembled fuselage barrel section 310. Fig. 4 is a cross-sectional side view of another example of a composite fuselage frame 100. Fig. 5 is another cross-sectional side view of the composite fuselage frame 100 of Fig. 4 showing polymer matrix composite layers 502, 504. Fig. 6 is an exploded front view showing an example of polymer matrix composite layers 502, 504 and outer protective fiberglass layers 506 in yet another example of a composite fuselage frame 100. Fig. 7 is an exploded side view showing the polymer matrix composite layers 502, 504 and outer protective fiberglass layers 506 in the composite fuselage frame 100 of Fig. 6. Fig. 8 is a side view of the composite fuselage frame 100 of Figs. 4 and 5 showing an example of a frame filler 802 (in phantom lines) integrated within the composite fuselage frame 100.

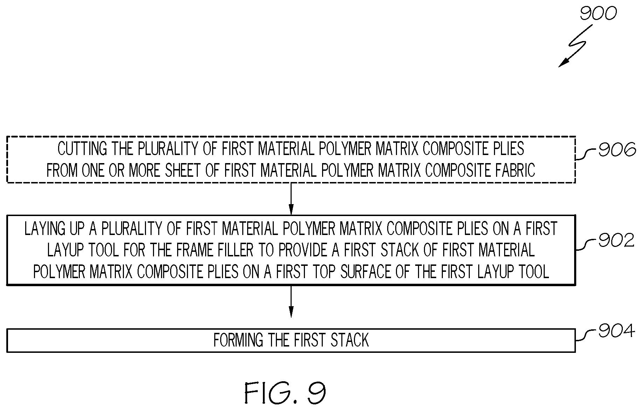

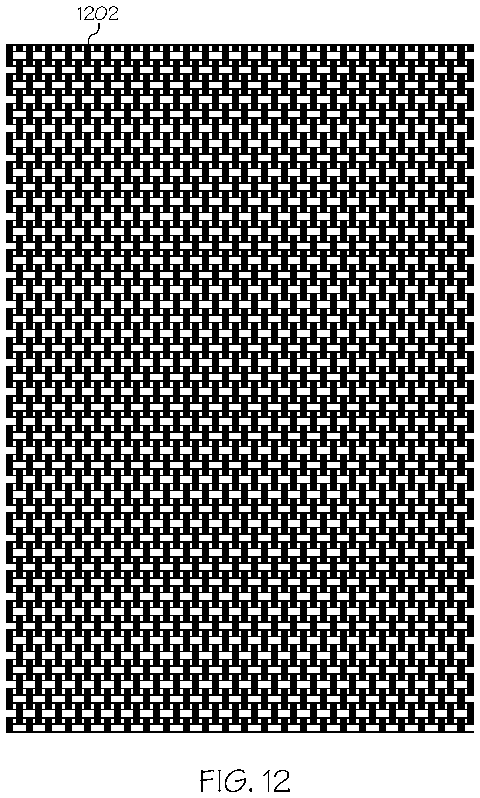

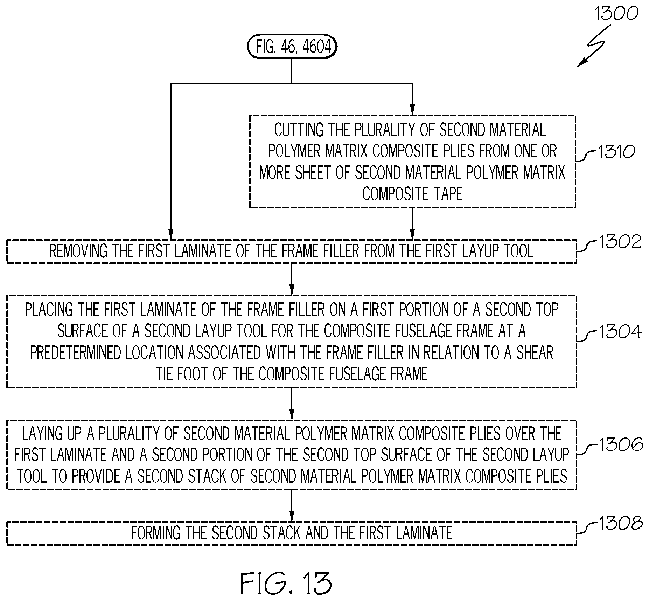

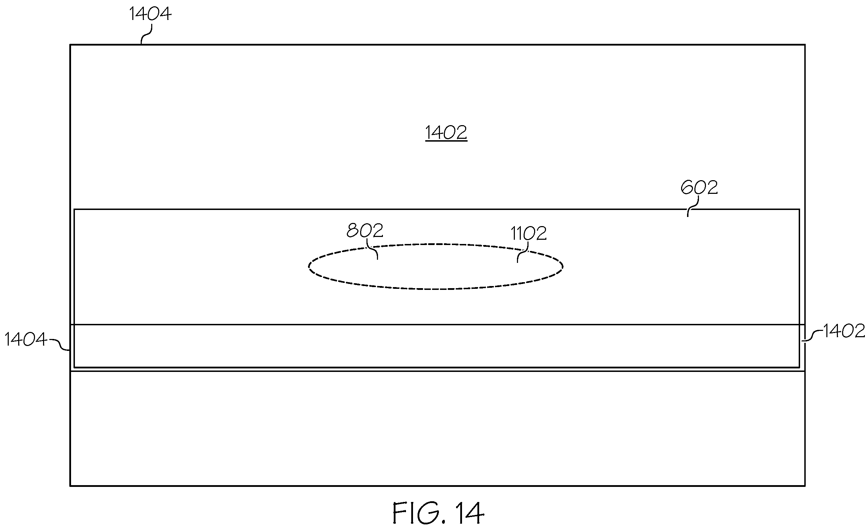

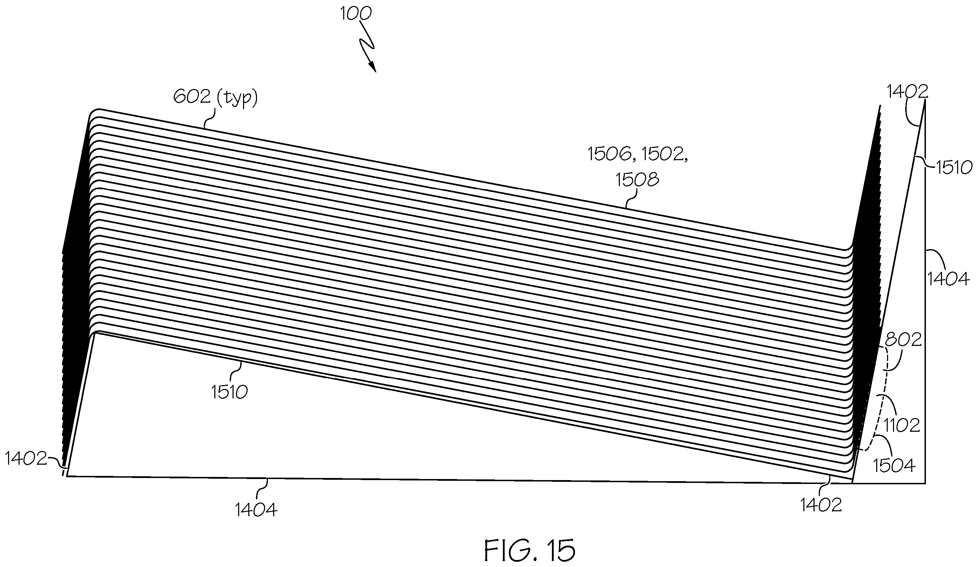

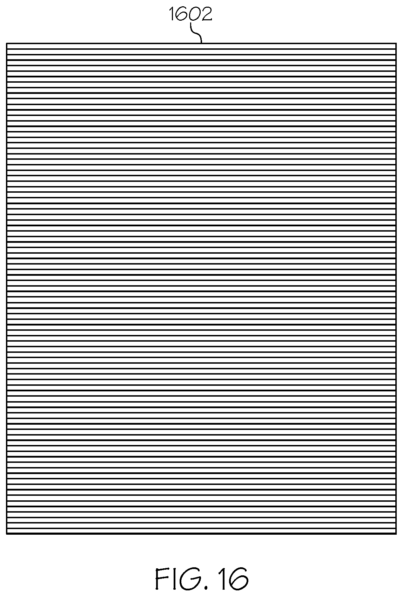

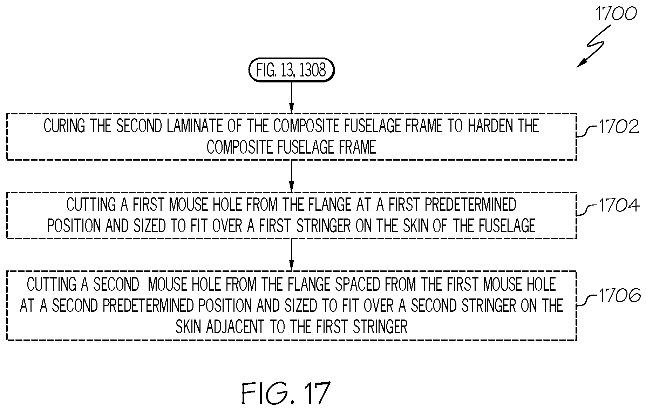

Fig. 9 provides an example of the method 900 of fabricating a frame filler 802 for a composite fuselage frame 100. Fig. 10 is an exploded front view showing an example of polymer matrix composite layers 502, 504 in an example of a frame filler 802 for the composite fuselage frame 100 of Figs. 4 and 5. Fig. 11 is a front view of an example of a laminate 1102 of the frame filler 802 of Fig. 10. Fig. 12 is a top view of an example of a sheet of first material polymer matrix composite fabric 1202. Fig. 13, in combination with Fig. 9, provides an example of the method 1300 of fabricating a frame filler 802 for a composite fuselage frame 100. Fig. 14 is a rear view of an example of a layup tool 1404 upon which the laminate 1102 of the frame filler 802 (in phantom lines) of Fig. 8 was placed and over which an example of a second material polymer matrix composite ply 602 was overlaid. Fig. 15 is an exploded side view of the layup tool 1404 of Fig. 14 showing the laminate 1102 of the frame filler 802 (in phantom lines) and an example of a stack of second material polymer matrix composite plies 602 overlaid on the frame filler 802. Fig. 16 is a top view of an example of a sheet of second material polymer matrix composite tape 1602. Fig. 17, in combination with Figs. 9 and 13, provides an example of the method 1700 of fabricating a frame filler 802 for a composite fuselage frame 100. Fig. 18 is a side view of an example of a laminate 1502 of an example of the composite fuselage frame 100 showing the laminate 1102 of the frame filler 802 in Fig. 11 integrated within the composite fuselage frame 100.

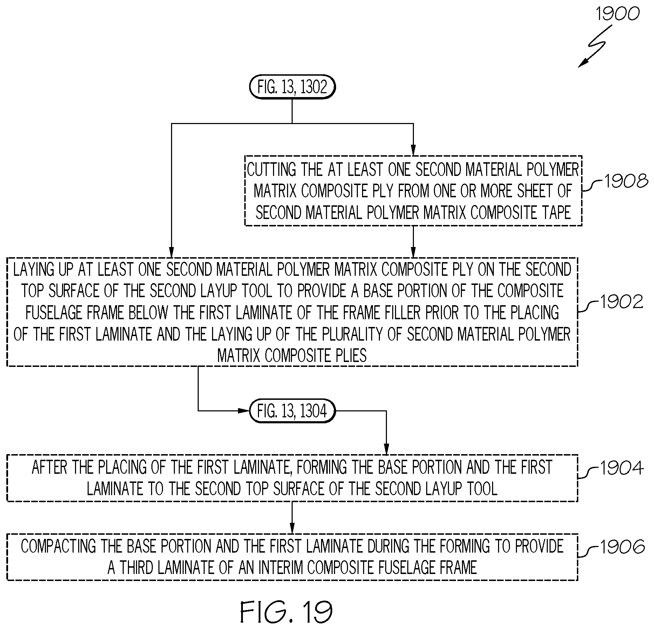

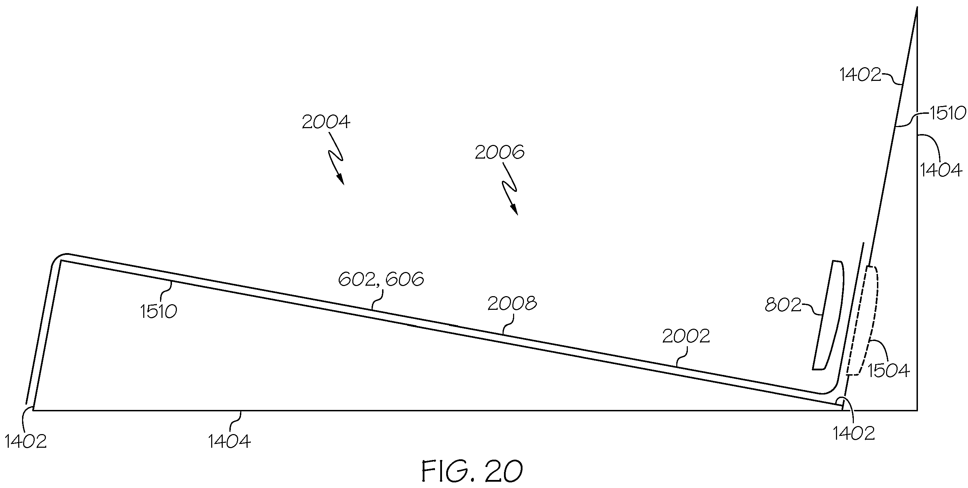

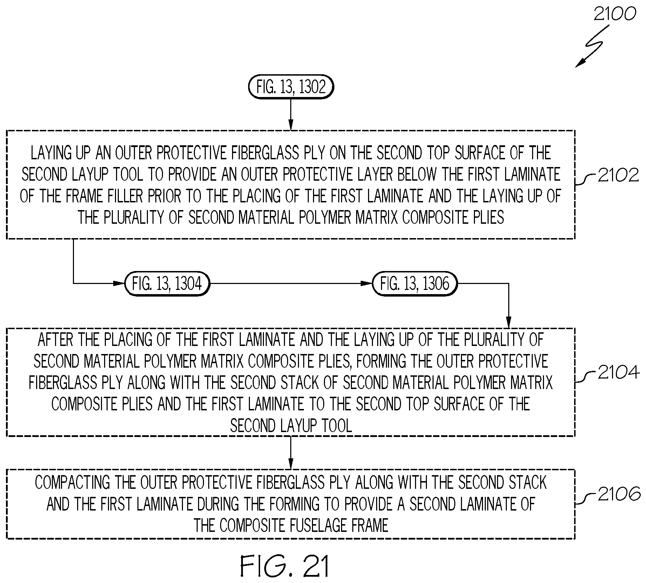

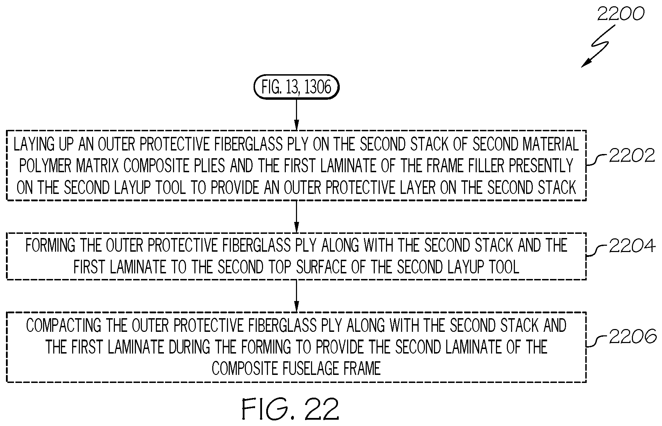

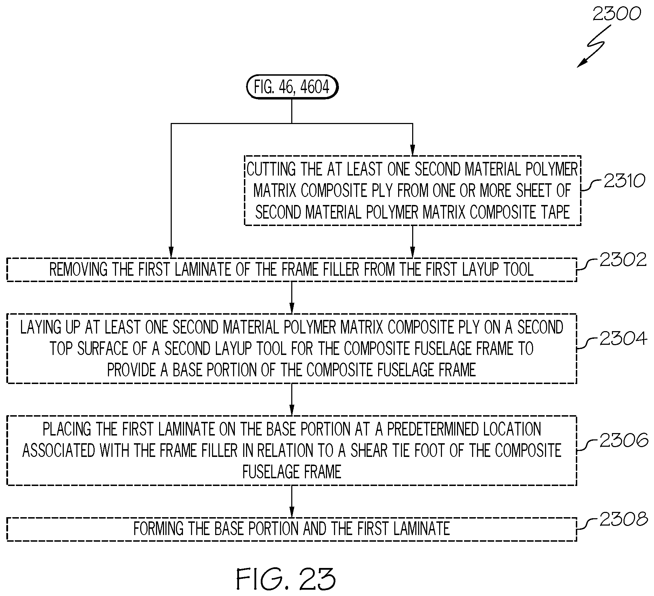

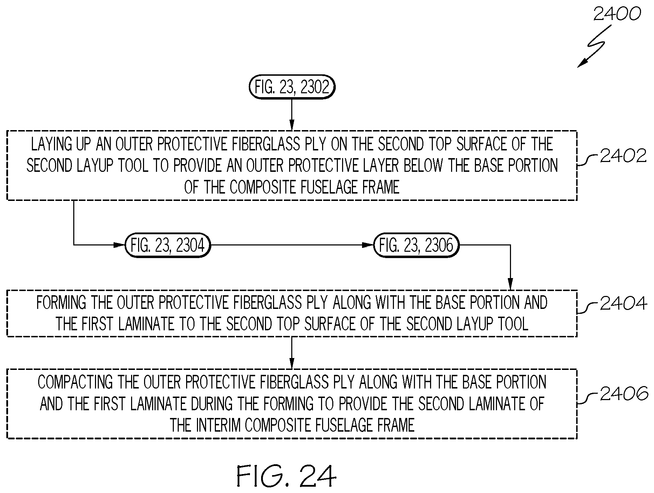

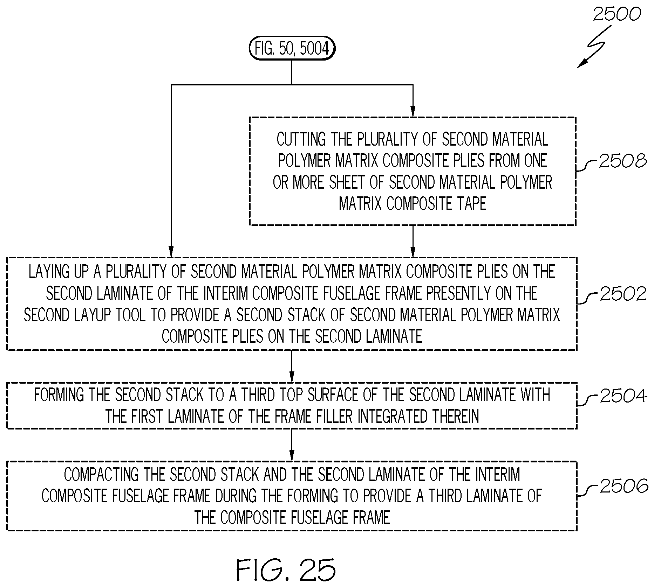

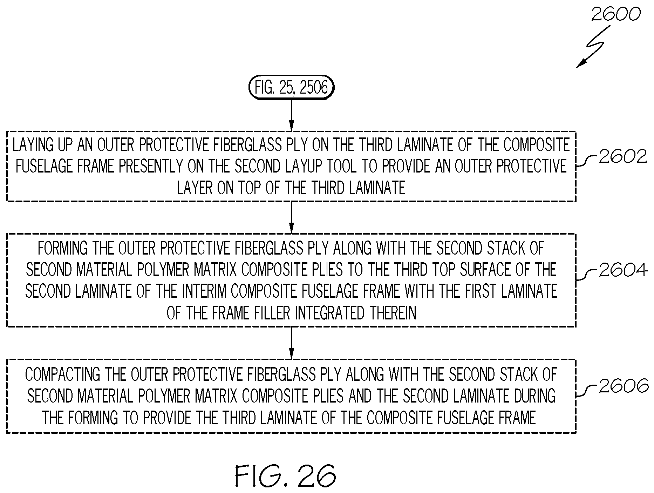

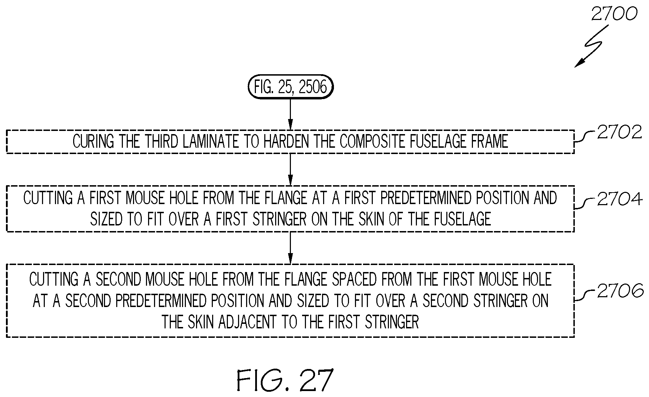

Fig. 19, in combination with Figs. 9 and 13, provides an example of the method 1900 of fabricating a frame filler 802 for a composite fuselage frame 100. Fig. 20 is an exploded side view of the layup tool 1404 of Fig. 14 showing an example of a second material polymer matrix composite ply 602 overlaid on the layup tool 1404 and awaiting placement of the frame filler 802. Fig. 21, in combination with Figs. 9 and 13, provides an example of the method 2100 of fabricating a frame filler 802 for a composite fuselage frame 100. Fig. 22, in combination with Figs. 9 and 13, provides an example of the method 2200 of fabricating a frame filler 802 for a composite fuselage frame 100. Fig. 23, in combination with Fig. 9, provides an example of the method 2300 of fabricating a frame filler 802 for a composite fuselage frame 100. Fig. 24, in combination with Figs. 9 and 23, provides an example of the method 2400 of fabricating a frame filler 802 for a composite fuselage frame 100. Fig. 25, in combination with Figs. 9 and 23, provides an example of the method 2500 of fabricating a frame filler 802 for a composite fuselage frame 100. Fig. 26, in combination with Figs. 9 and 23, provides an example of the method 2600 of fabricating a frame filler 802 for a composite fuselage frame 100. Fig. 27, in combination with Figs. 9, 23 and 25, provides an example of the method 2700 of fabricating a frame filler 802 for a composite fuselage frame 100.

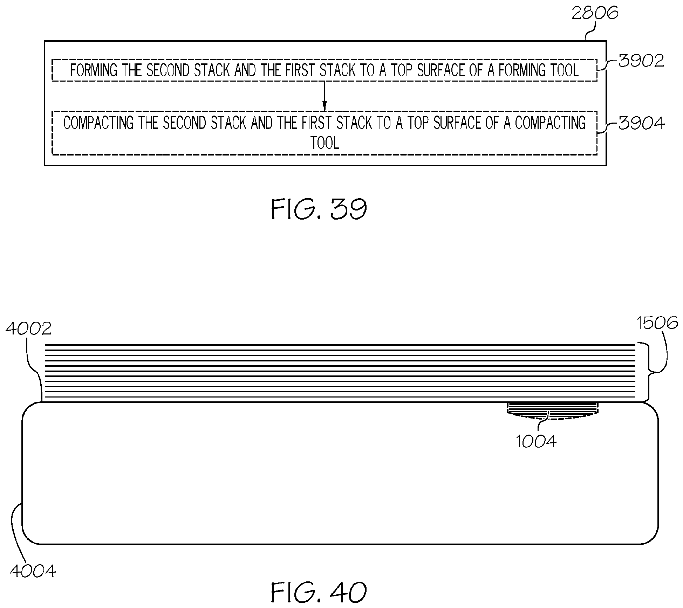

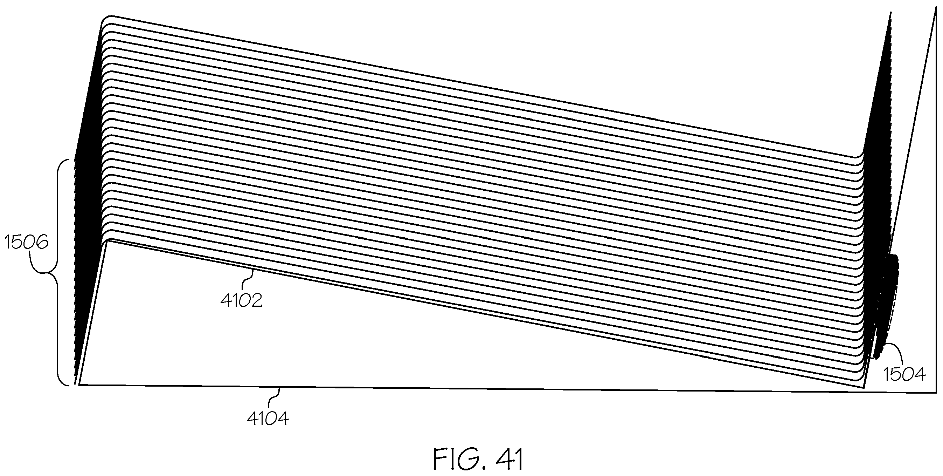

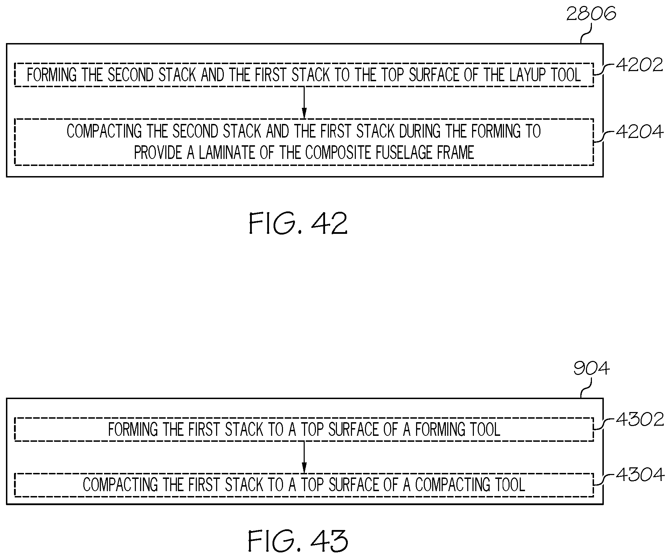

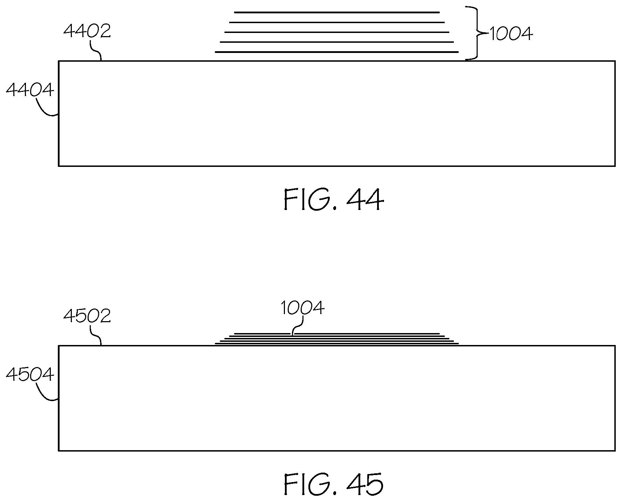

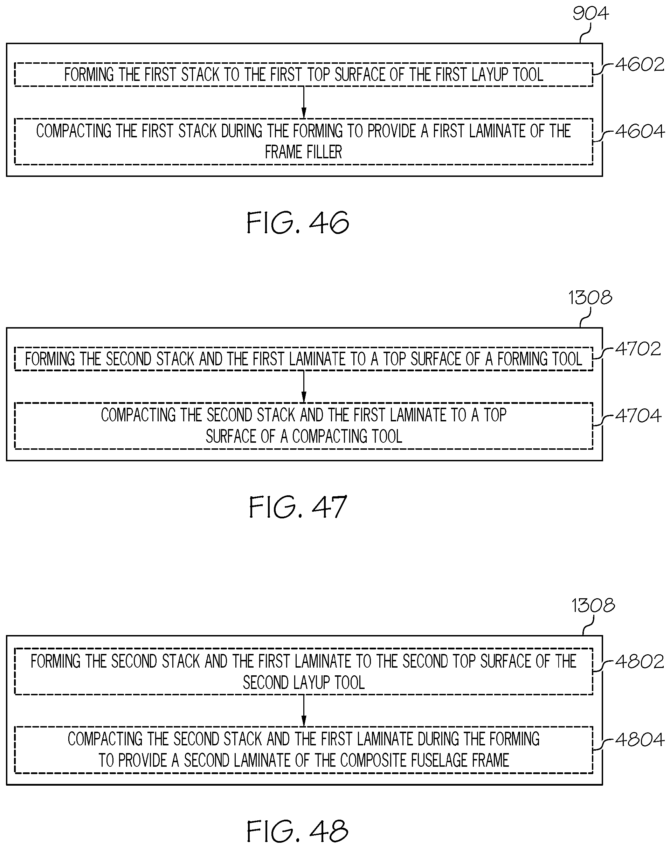

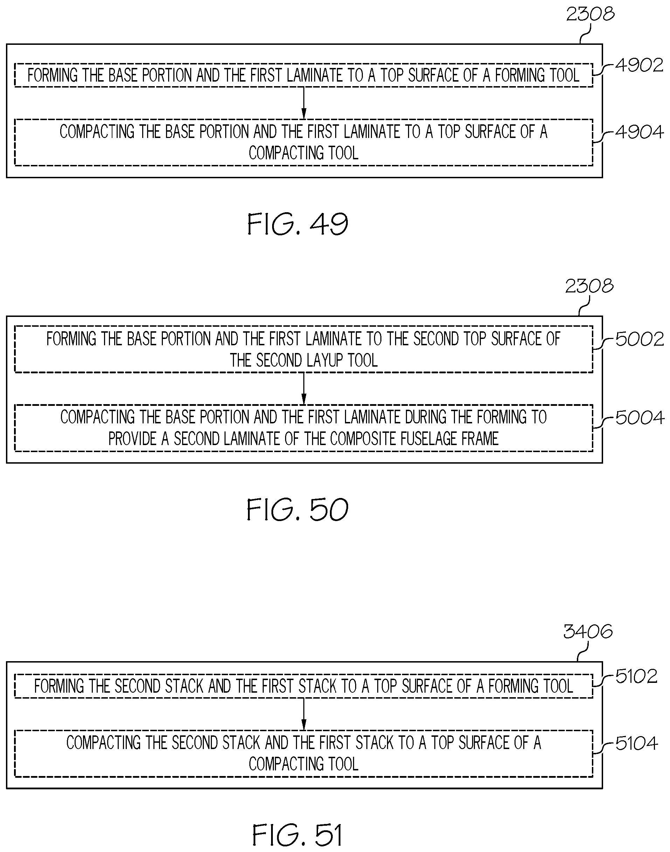

Fig. 40 is a side view of an example of a forming tool 4004 for a composite fuselage frame 100. Fig. 41 is a side view of an example of a compacting tool 4104 for a composite fuselage frame 100. Fig. 43 provides an example of the forming 904 of the first stack 1004 in the method 900 of Fig. 9. Fig. 44 is a side view of an example of a forming tool 4404 for a frame filler 802. Fig. 45 is a side view of an example of a compacting tool 4504 for a frame filler 802. Fig. 46 provides another example of the forming 904 of the first stack 1004 in the method 900 of Fig. 9. Fig. 47 provides an example of the forming 1308 of the second stack 1506 and the first laminate 1102 in Fig. 13. Fig. 48 provides another example of the forming 1308 of the second stack 1506 and the first laminate 1102 in Fig. 13. Fig. 49 provides an example of the forming 2308 of the base portion 2002 and the first laminate 1102 in Fig. 23. Fig. 50 provides another example of the forming 2308 of the base portion 2002 and the first laminate 1102 in Fig. 23.

With reference again to Figs. 1, 6-12 and 43-46, in one or more example, a method 900 (see Fig. 9) of fabricating a frame filler 802 for a composite fuselage frame 100 includes laying up 902 a plurality of first material polymer matrix composite plies 604 on a first layup tool 1002 for the frame filler 802 to provide a first stack 1004 of first material polymer matrix composite plies 604 on a first top surface 1006 of the first layup tool 1002. At 904, the first stack 1004 is formed.

In yet other examples of the method 900, the first material polymer matrix composite plies 604 include thermoset matrix composite plies, thermoplastic matrix composite plies or any other suitable woven polymer matrix composite plies in any suitable combination. In still other examples of the method 900, the first material polymer matrix composite plies 604 include a reinforcement fabric and polymer matrix material. In further examples, the reinforcement fabric includes a plain weave fabric, a 0/90-degree weave fabric, a 45-degree weave fabric or any other suitable woven reinforcement fabric in any suitable combination. In other further examples, the reinforcement fabric includes woven reinforcement fibers that are interwoven in at least two directions. In an even further example, the woven reinforcement fibers include glass fibers, carbon fibers, aramid fibers, natural fibers, polyetheretherketone fibers or any other suitable reinforcement fibers. In yet other further examples, the polymer matrix material includes a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin, a polyetheretherketone resin or any other suitable polymer matrix material in any suitable combination. In certain other examples of the method 900, the composite fuselage frame 100 also includes a one-piece section 116.

In still yet other examples, the method 900 also includes cutting 906 the plurality of first material polymer matrix composite plies 604 from one or more sheet of first material polymer matrix composite fabric 1202. In this and certain other examples, the method 900 continues from 906 to 902. In certain other examples of the method 900, the forming 904 of the first stack 1004 includes forming 4302 the first stack 1004 to a top surface 4402 of a forming tool 4404. At 4304, the first stack 1004 is compacted to a top surface 4502 of a compacting tool 4504. In yet other examples of the method 900, the forming 904 of the first stack 1004 includes forming 4602 the first stack 1004 to the first top surface 1006 of the first layup tool 1002. At 4604, the first stack 1004 is compacted during the forming 4602 to provide a first laminate 1102 of the frame filler 802.

With reference again to Figs. 1-11, 13-15, 40, 41 and 46-48, in one or more example, a method 1300 (see Fig. 13) of fabricating a frame filler 802 for a composite fuselage frame 100 includes the method 900 of Fig. 9 and continues from 4604 of Fig. 46 to 1302 where the first laminate 1102 of the frame filler 802 is removed from the first layup tool 1002. At 1304, the first laminate 1102 is placed on a first portion 1504 of a second top surface 1402 of a second layup tool 1404 for the composite fuselage frame 100 at a predetermined location associated with the frame filler 802 in relation to a shear tie foot 114 of the composite fuselage frame 100. At 1306, a plurality of second material polymer matrix composite plies 602 are laid up over the first laminate 1102 and a second portion 1510 of the second top surface 1402 of the second layup tool 1404 to provide a second stack 1506 of second material polymer matrix composite plies 602. At 1308, the second stack 1506 and the first laminate 1102 are formed.

In certain other examples of the method 1300, the second material polymer matrix composite plies 602 include thermoset matrix composite plies, thermoplastic matrix composite plies or any other suitable unidirectional polymer matrix composite plies in any suitable combination. In yet other examples of the method 1300, the second material polymer matrix composite plies 602 include unidirectional reinforcement fibers and polymer matrix material. In further examples, the unidirectional reinforcement fibers include carbon fibers, glass fibers, aramid fibers, natural fibers, polyetheretherketone fibers or any other suitable reinforcement fibers in any suitable combination. In other further examples, the polymer matrix material includes a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin, a polyetheretherketone resin or any other suitable polymer matrix material in any suitable combination.

In still other examples, the method 1300 continues from 4604 of Fig. 46 to 1310 where the plurality of second material polymer matrix composite plies 602 are cut from one or more sheet of second material polymer matrix composite tape 1602. In this and certain other examples, the method 1300 continues from 1310 to 1302. In still yet other examples of the method 1300, the forming 1308 of the second stack 1506 and the first laminate 1102 includes forming 4702 the second stack 1506 and the first laminate 1102 to a top surface 4002 of a forming tool 4004. At 4704, the second stack 1506 and the first laminate 1102 is compacted to a top surface 4102 of a compacting tool 4104. In certain other examples of the method 1300, the forming 1308 of the second stack 1506 and the first laminate 1102 includes forming 4802 the second stack 1506 and the first laminate 1102 to the second top surface 1402 of the second layup tool 1404. At 4804, the second stack 1506 and the first laminate 1102 are compacted during the forming 4802 to provide a second laminate 1502 of the composite fuselage frame 100.

With reference again to Figs. 1-10, 13, 15, 17 and 18, in one or more examples, a method 1700 (see Fig. 17) of fabricating a frame filler 802 for a composite fuselage frame 100 includes the method 900 of Fig. 9 and the method 1300 of Fig. 13 and continues from 4804 of Fig. 48 to 1702 where the second laminate 1502 of the composite fuselage frame 100 is cured to harden the composite fuselage frame 100. In this and certain other examples, after the curing 1314 of the second laminate 1502, the composite fuselage frame 100 includes a web 102 and a flange 1802. The web 102 includes a width 103 and a first predetermined thickness 402. The web 102 forms an arc 104 between a first end 106 and a second end 108 in relation to a fuselage 202 of an aircraft 200. The width 103 extends from an outer side 404 in relation to a skin 204 on the fuselage 202 to an inner side 406. The flange 1802 disposed on the outer side 404 of the web 102 and projecting from the first predetermined thickness 402 of the web 102. At 1704, the method 1700 continues with cutting a first mouse hole 110 from the flange 1802 at a first predetermined position and sized to fit over a first stringer 302 on the skin 204 of the fuselage 202. The first predetermined position is based on a first location of the first stringer 302 on the skin 204. At 1704, a second mouse hole 112 is cut from the flange 1802 spaced from the first mouse hole 110 at a second predetermined position and sized to fit over a second stringer 304 on the skin 204 adjacent to the first stringer 302. The second predetermined position is based on a second location of the second stringer 304 on the skin 204.

In still other examples, the composite fuselage frame 100 is configured to provide crosswise support 314 to an interior surface 312 of a skin 204 for a fuselage barrel section 310 with a plurality of stringers 305. The composite fuselage frame 100 spans the plurality of stringers 305. The composite fuselage frame 100 includes a plurality of shear tie feet 114 that extend toward the skin 204 between adjacent stringers 305. Each shear tie foot 114 has a frame filler 802 integrated therein during fabrication of the composite fuselage frame 100 such that the composite fuselage frame 100 includes a plurality of frame fillers 802 integrated within the plurality of shear tie feet 114.

In certain other examples of the method 1700, the shear tie foot 114 extends from the web 102 between the first mouse hole 110 and the second mouse hole 112 to a distal end 1804 of the flange 1802. An outer surface 410 of the shear tie foot 114 is configured to face the skin 204 and align with a corresponding portion of the skin 204. In yet other examples of the method 1700, the shear tie foot 114 extends from the first predetermined thickness 402 of the web 102 such that a side of the shear tie foot 114 is configured to face the skin 204 and to fit within an area defined by the first stringer 302, the second stringer 304 and a corresponding portion of the skin 204 between the first stringer 302 and the second stringer 304. In still other examples of the method 1700, multiple composite fuselage frames 100 form a segmented frame 306 for a slice 308 of the fuselage 202 of the aircraft 200.

In still yet other examples of the method 1700, a portion of the flange 1802 between the first mouse hole 110 and the second mouse hole 112 defines the shear tie foot 114 which includes a second predetermined thickness 408. The first predetermined thickness 402 of the web 102 is defined by a first plurality of first polymer matrix composite layers 502 formed by the plurality of second material polymer matrix composite plies 602. The second predetermined thickness 408 of the shear tie foot 114 is defined by the first predetermined thickness 402 and a second plurality of second polymer matrix composite layers 504 formed by the plurality of first material polymer matrix composite plies 604 that provide the frame filler 802 integrated with the plurality of second material polymer matrix composite plies 602 of the first predetermined thickness 402.

With reference again to Figs. 1, 6-10, 13 and 15, in one or more examples, a method of fabricating a frame filler 802 for a composite fuselage frame 100 includes the method 900 of Fig. 9, the method 1300 of Fig. 13 and continues from 1302 to integrating the frame filler 802 into the shear tie foot 114 of the composite fuselage frame 100 via clamped arc forming of the second stack 1506 of second material polymer matrix composite plies 602 over the first stack 1004 of first material polymer matrix composite plies 604. Next, the frame filler 802 provided by the first stack 1004 and the shear tie foot 114 provided by the second stack 1506 are co-cured to harden the composite fuselage frame 100.

With reference again to Figs. 1, 6-9, 11, 13, 14, 16, 19 and 20, in one or more examples, a method 1900 (see Fig. 19) of fabricating a frame filler 802 for a composite fuselage frame 100 includes the method 900 of Fig. 9, the method 1300 of Fig. 13 and continues from 1302 to 1902 where at least one second material polymer matrix composite ply 602 is laid up on the second top surface 1402 of the second layup tool 1404 to provide a base portion 2002 of the composite fuselage frame 100 below the first laminate 1102 of the frame filler 802 prior to the placing 1304 of the first laminate 1102 and the laying up 1306 of the plurality of second material polymer matrix composite plies 602. The method 1900 continues from 1902 to 1304 of Fig. 13. At 1904, after the placing 1304 of the first laminate 1102, the base portion 2002 and the first laminate 1102 are formed to the second top surface 1402 of the second layup tool 1404. At 1906, the base portion 2002 and the first laminate 1102 are compacted during the forming 1904 to provide a second laminate 2004 of an interim composite fuselage frame 2006. The method 1900 continues from 1906 to 1306 of Fig. 13. In certain other examples, the method 1900 continues from 1302 of Fig. 13 to 1908 where the at least one second material polymer matrix composite ply 602 is cut from one or more sheet of second material polymer matrix composite tape 1602. In this and certain other examples, the method 1900 continues from 1908 to 1902.

With reference again to Figs. 1, 5, 6, 9, 13-15, and 21, in one or more examples, a method 2100 (see Fig. 21) of fabricating a frame filler 802 for a composite fuselage frame 100 includes the method 900 of Fig. 9, the method 1300 of Fig. 13 and continues from 1302 to 2102 where an outer protective fiberglass ply 606 is laid up on the second top surface 1402 of the second layup tool 1404 to provide an outer protective fiberglass layer 506 below the first laminate 1102 of the frame filler 802 prior to the placing 1304 of the first laminate and the laying up 1306 of the plurality of second material polymer matrix composite plies 602. The method 2100 continues from 2102 to 1304 and 1306 of Fig. 13. At 2104, after the placing 1304 of the first laminate and the laying up 1306 of the plurality of second material polymer matrix composite plies 602, the outer protective fiberglass ply 606 along with the second stack 1506 of second material polymer matrix composite plies 602 and the first laminate 1102 are formed to the second top surface 1402 of the second layup tool 1404. At 2106, the outer protective fiberglass ply 606 along with the second stack 1506 and the first laminate 1102 are compacted during the forming 2104 to provide a second laminate 1502 of the composite fuselage frame 100.

With reference again to Figs. 1, 5, 6, 9, 11, 13-15, and 22, in one or more examples, a method 2200 (see Fig. 22) of fabricating a frame filler 802 for a composite fuselage frame 100 includes the method 900 of Fig. 9, the method 1300 of Fig. 13 and continues from 1302 to 2202 where an outer protective fiberglass ply 606 is laid up on the second stack 1506 of second material polymer matrix composite plies 602 and the first laminate 1102 of the frame filler 802 presently on the second layup tool 1404 to provide an outer protective fiberglass layer 506 on top of the second stack 1506. At 2204, the outer protective fiberglass ply 606 along with the second stack 1506 and the first laminate 1102 are formed to the second top surface 1402 of the second layup tool 1404. At 2206, the outer protective fiberglass ply 606 along with the second stack 1506 and the first laminate 1102 are compacted during the forming 2204 to provide a second laminate 1502 of the composite fuselage frame 100.

With reference again to Figs. 1, 6-11, 14, 16, 20, 23 40, 41, 49 and 50 in one or more examples, a method 2300 (see Fig. 23) of fabricating a frame filler 802 for a composite fuselage frame 100 includes the method 900 of Fig. 9 and continues from 906 to 2302 where the first laminate 1102 of the frame filler 802 is removed from the first layup tool 1002. At 2304, at least one second material polymer matrix composite ply 602 is laid up on a second top surface 1402 of a second layup tool 1404 for the composite fuselage frame 100 to provide a base portion 2002 of the composite fuselage frame 100. At 2306, the first laminate 1102 is placed on the base portion 2002 at a predetermined location associated with the frame filler 802 in relation to a shear tie foot 114 of the composite fuselage frame 100. At 2308, the base portion 2002 and the first laminate 1102 are formed

In certain other examples, the method 2300 also includes cutting 2310 the at least one second material polymer matrix composite ply 602 from one or more sheet of second material polymer matrix composite tape 1602. In this and certain other examples, the method 2300 continues from 2310 to 2302. In yet other examples of the method 2300, the forming 2308 of the base portion 2002 and the first laminate 1102 includes forming 4902 the base portion 2002 and the first laminate 1102 to a top surface 4002 of a forming tool 4004. At 4904, the base portion 2002 and the first laminate 1102 are compacted to a top surface 4102 of a compacting tool 4104. In still other examples of the method 2300, the forming 2308 of the base portion 2002 and the first laminate 1102 includes forming 5002 the base portion 2002 and the first laminate 1102 to the second top surface 1402 of the second layup tool 1404. At 5004, the base portion 2002 and the first laminate 1102 are compacted during the forming 5002 to provide a second laminate 2004 of an interim composite fuselage frame 2006.

With reference again to Figs. 1, 5, 6, 9, 11, 14, 20, 23 and 24, in one or more examples, a method 2400 (see Fig. 24) of fabricating a frame filler 802 for a composite fuselage frame 100 includes the method 900 of Fig. 9, the method 2300 of Fig. 23 and continues from 2302 to 2402 where an outer protective fiberglass ply 606 is laid up on the second top surface 1402 of the second layup tool 1404 to provide an outer protective fiberglass layer 506 below the base portion 2002 of the composite fuselage frame 100. The method continues from 2402 to 2304 and 2306 of Fig. 23. At 2404, the outer protective fiberglass ply 606 along with the base portion 2002 and the first laminate 1102 are formed to the second top surface 1402 of the second layup tool 1404. At 2406, the outer protective fiberglass ply 606 along with the base portion 2002 and the first laminate 1102 are compacted during the forming 2404 to provide the second laminate 2004 of the interim composite fuselage frame 2006.

With reference again to Figs. 1, 6-9, 11, 14-16, 20, 23, 25 and 50, in one or more examples, a method 2500 (see Fig. 25) of fabricating a frame filler 802 for a composite fuselage frame 100 includes the method 900 of Fig. 9, the method 2300 of Fig. 23 and continues from 5004 of Fig. 50 to 2502 where a plurality of second material polymer matrix composite plies 602 are laid up on the second laminate 2004 of the interim composite fuselage frame 2006 presently on the second layup tool 1404 to provide a second stack 1506 of second material polymer matrix composite plies 602 on the second laminate 2004. At 2504, the second stack 1506 is formed to a third top surface 2008 of the second laminate 2004 with the first laminate 1102 of the frame filler 802 integrated therein. At 2506, the second stack 1506 and the second laminate 2004 of the interim composite fuselage frame 2006 a compacted during the forming 2504 to provide a third laminate 1508 of the composite fuselage frame 100. In certain other examples, the method 2500 also includes cutting 2508 the plurality of second material polymer matrix composite plies 602 from one or more sheet of second material polymer matrix composite tape 1602. In this and certain other examples, the method continues from 2508 to 2502.

With reference again to Figs. 1, 5, 6-9, 11, 14, 15, 20, 23 and 26, in one or more examples, a method 2600 (see Fig. 26) of fabricating a frame filler 802 for a composite fuselage frame 100 includes the method 900 of Fig. 9, the method 2300 of Fig. 23, the method 2500 of Fig. 25 and continues from 2506 to 2602 where an outer protective fiberglass ply 606 is laid up on the third laminate 1508 of the composite fuselage frame 100 presently on the second layup tool 1404 to provide an outer protective fiberglass layer 506 on top of the third laminate 1508. At 2604, the outer protective fiberglass ply 606 along with the second stack 1506 of second material polymer matrix composite plies 602 is formed to the third top surface 2008 of the second laminate 2004 of the interim composite fuselage frame 2006 with the first laminate 1102 of the frame filler 802 integrated therein. At 2606, the outer protective fiberglass ply 606 along with the second stack 1506 of second material polymer matrix composite plies 602 and the second laminate 2004 is compacted during the forming 2604 to provide the third laminate 1508 of the composite fuselage frame 100.

With reference again to Figs. 1-4, 9, 15, 18, 23, 25 and 27, in one or more examples, a method 2700 (see Fig. 27) of fabricating a frame filler 802 for a composite fuselage frame 100 includes the method 900 of Fig. 9, the method 2300 of Fig. 23, the method 2500 of Fig. 25 and continues from 2506 to 2702 where the third laminate 1508 of the composite fuselage frame 100 is cured to harden the composite fuselage frame 100. In certain other examples of the method 2700, after the curing 2702 of the third laminate 1508, the composite fuselage frame 100 includes a web 102 and a flange 1802. The web 102 includes a width 103 and a first predetermined thickness 402. The web 102 forms an arc 104 between a first end 106 and a second end 108 in relation to a fuselage 202 of an aircraft 200. The width 103 extends from an outer side 404 in relation to a skin 204 on the fuselage 202 to an inner side 406. The flange 1802 disposed on the outer side 404 of the web 102 and projecting from the first predetermined thickness 402 of the web 102. In this and certain other examples, the method 2700 continues from 2702 to 2704 where a first mouse hole 110 is cut from the flange 1802 at a first predetermined position and sized to fit over a first stringer 302 on the skin 204 of the fuselage 202. The first predetermined position is based on a first location of the first stringer 302 on the skin 204. At 2706, a second mouse hole 112 is cut from the flange 1802 spaced from the first mouse hole 110 at a second predetermined position and sized to fit over a second stringer 304 on the skin 204 adjacent to the first stringer 302. The second predetermined position is based on a second location of the second stringer 304 on the skin 204.

In still other examples, the composite fuselage frame 100 is configured to provide crosswise support 314 to an interior surface 312 of a skin 204 for a fuselage barrel section 310 with a plurality of stringers 305. The composite fuselage frame 100 spans the plurality of stringers 305. The composite fuselage frame 100 includes a plurality of shear tie feet 114 that extend toward the skin 204 between adjacent stringers 305. Each shear tie foot 114 has a frame filler 802 integrated therein during fabrication of the composite fuselage frame 100 such that the composite fuselage frame 100 includes a plurality of frame fillers 802 integrated within the plurality of shear tie feet 114.

With reference again to Figs. 1, 6-10, 15 and 23, in one or more examples, a method of fabricating a frame filler 802 for a composite fuselage frame 100 includes the method 900 of Fig. 9, the method 2300 of Fig. 23 and continues from 2302 to integrating the frame filler 802 into the shear tie foot 114 of the composite fuselage frame 100 via clamped arc forming of the second stack 1506 of second material polymer matrix composite plies 602 over the first stack 1004 of first material polymer matrix composite plies 604. Next, the frame filler 802 provided by the first stack 1004 and the shear tie foot 114 provided by the second stack 1506 are co-cured to harden the composite fuselage frame 100.

Referring generally to Figs. 1-8, 10, 12, 14-16, 18, 28-32 and 39-42, by way of examples, the present disclosure is directed to a method 2800, 2900, 3000, 3100, 3200, 3800 of fabricating a composite fuselage frame 100 for an aircraft 200. Fig. 1 is a perspective view of an example of a composite fuselage frame 100. Fig. 2 is a perspective view of an example of an aircraft 200. Fig. 3 is a perspective view of an example of a partially assembled fuselage barrel section 310. Fig. 4 is a cross-sectional side view of another example of a composite fuselage frame 100. Fig. 5 is another cross-sectional side view of the composite fuselage frame 100 of Fig. 4 showing polymer matrix composite layers 502, 504. Fig. 6 is an exploded front view showing an example of polymer matrix composite layers 502, 504 and outer protective fiberglass layers 506 in yet another example of a composite fuselage frame 100. Fig. 7 is an exploded side view showing the polymer matrix composite layers 502, 504 and outer protective fiberglass layers 506 in the composite fuselage frame 100 of Fig. 6.

Fig. 8 is a side view of the composite fuselage frame 100 of Figs. 4 and 5 showing an example of a frame filler 802 (in phantom lines) integrated within the composite fuselage frame 100. Fig. 10 is an exploded front view showing an example of polymer matrix composite layers 502, 504 in an example of a frame filler 802 for the composite fuselage frame 100 of Figs. 4 and 5. Fig. 12 is a top view of an example of a sheet of first material polymer matrix composite fabric 1202. Fig. 14 is a rear view of an example of a layup tool 1404 upon which the laminate 1102 of the frame filler 802 (in phantom lines) of Fig. 8 was placed and over which an example of a second material polymer matrix composite ply 602 was overlaid. Fig. 15 is an exploded side view of the layup tool 1404 of Fig. 14 showing the laminate 1102 of the frame filler 802 (in phantom lines) and an example of a stack of second material polymer matrix composite plies 602 overlaid on the frame filler 802. Fig. 16 is a top view of an example of a sheet of second material polymer matrix composite tape 1602. Fig. 18 is a side view of an example of a laminate 1502 of an example of the composite fuselage frame 100 showing the laminate 1102 of the frame filler 802 in Fig. 11 integrated within the composite fuselage frame 100.

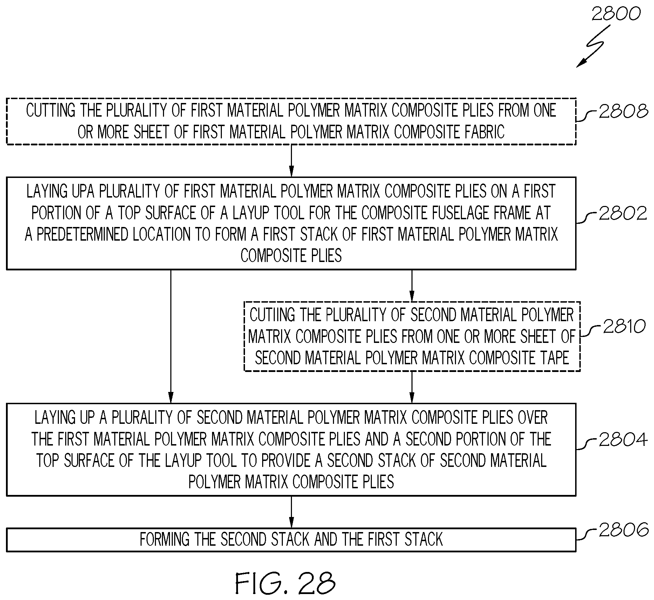

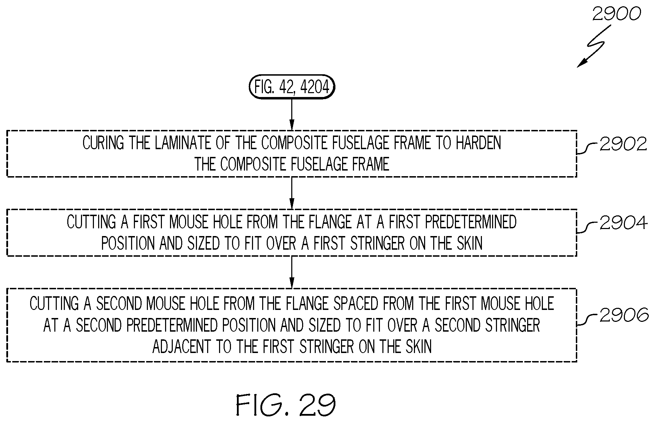

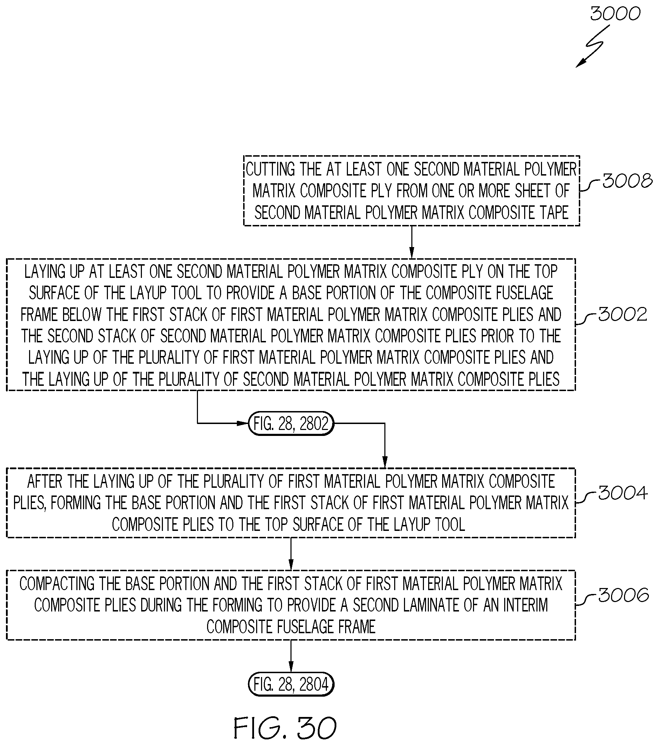

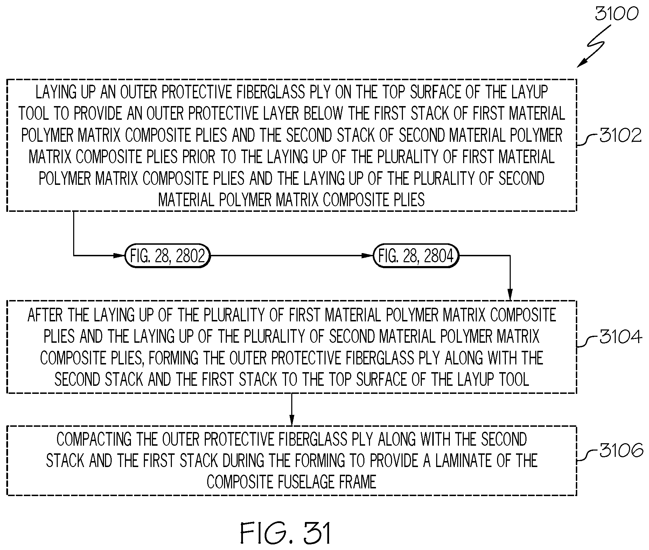

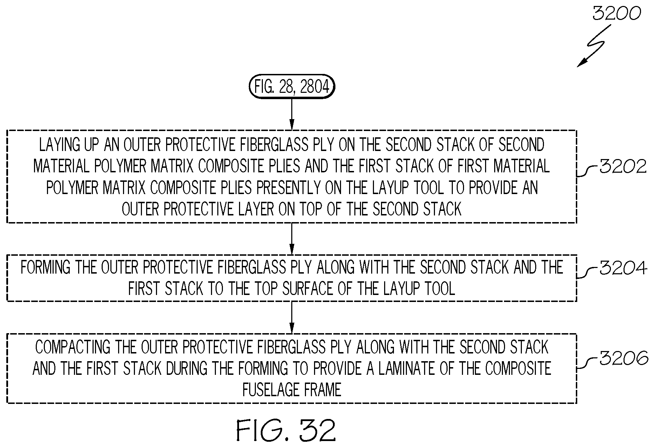

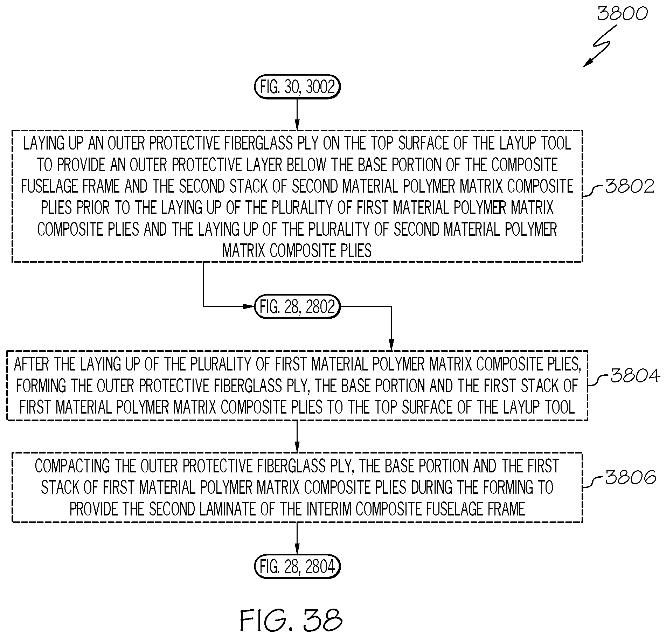

Fig. 28 provides an example of the method 2800 of fabricating a composite fuselage frame 100 for an aircraft 200. Fig. 29, in combination with Fig. 28, provides an example of the method 2900 of fabricating a composite fuselage frame 100 for an aircraft 200. Fig. 30, in combination with Fig. 28, provides an example of the method 3000 of fabricating a composite fuselage frame 100 for an aircraft 200. Fig. 31, in combination with Fig. 28, provides an example of the method 3100 of fabricating a composite fuselage frame 100 for an aircraft 200. Fig. 32, in combination with Fig. 28, provides an example of the method 3200 of fabricating a composite fuselage frame 100 for an aircraft 200. Fig. 38, in combination with Figs. 28 and 30, provides an example of the method 3800 of fabricating a composite fuselage frame for an aircraft.

Fig. 39 provides an example of the forming 2806 of the second stack 1506 and the first stack 1004 in the method 2800 of Fig. 28. Fig. 40 is a side view of an example of a forming tool 4004 for a composite fuselage frame 100. Fig. 41 is a side view of an example of a compacting tool 4104 for a composite fuselage frame 100. Fig. 42 provides another example of the forming 2806 of the second stack 1506 and the first stack 1004 in the method 2800 of Fig. 28.

With reference again to Figs. 1, 2, 6, 8, 10, 12, 14-16, 28 and 39-42, in one or more examples, a method 2800 (see Fig. 28) of fabricating a composite fuselage frame 100 for an aircraft 200 includes laying up 2802 a plurality of first material polymer matrix composite plies 604 on a first portion 1504 of a top surface 1402 of a layup tool 1404 for the composite fuselage frame 100 at a predetermined location to form a first stack 1004 of first material polymer matrix composite plies 604. The predetermined location being associated with a frame filler 802 in relation to a shear tie foot 114 of the composite fuselage frame 100. At 2804, a plurality of second material polymer matrix composite plies 602 are laid up over the first material polymer matrix composite plies 604 and a second portion 1510 of the top surface 1402 of the layup tool 1404 to provide a second stack 1506 of second material polymer matrix composite plies 602. At 2806, the second stack 1506 and the first stack 1004 are formed.

In certain other examples of the method 2800, the first material polymer matrix composite plies 604 include thermoset matrix composite plies, thermoplastic matrix composite plies or any other suitable woven polymer matrix composite plies in any suitable combination. In yet other examples of the method 2800, the first material polymer matrix composite plies 604 include a reinforcement fabric and polymer matrix material. In further examples, the reinforcement fabric includes a plain weave fabric, a 0/90-degree weave fabric, a 45-degree weave fabric or any other suitable reinforcement fabric in any suitable combination. In other further examples, the reinforcement fabric includes woven reinforcement fibers that are interwoven in at least two directions. In even further examples, the woven reinforcement fibers include glass fibers, carbon fibers, aramid fibers, natural fibers, polyetheretherketone fibers or any other suitable reinforcement fibers in any suitable combination. In yet other further examples, the polymer matrix material includes a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin, a polyetheretherketone resin or any other suitable polymer matrix material in any suitable combination.

In still other examples of the method 2800, the second material polymer matrix composite plies 602 include thermoset matrix composite plies, thermoplastic matrix composite plies or any other suitable unidirectional polymer matrix composite plies in any suitable combination. In still yet other examples of the method 2800, the second material polymer matrix composite plies 602 include unidirectional reinforcement fibers and polymer matrix material. In further examples, the unidirectional reinforcement fibers include carbon fibers, glass fibers, aramid fibers, natural fibers, polyetheretherketone fibers or any other suitable reinforcement fibers in any suitable combination. In other further examples, the polymer matrix material a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin, a polyetheretherketone resin or any other suitable polymer matrix material.

In certain other examples of the method 2800, the composite fuselage frame 100 also includes a one-piece section 116. In yet other examples, the method 2800 also includes cutting 2808 the plurality of first material polymer matrix composite plies 604 from one or more sheet of first material polymer matrix composite fabric 1202. In this and certain other examples, the method 2800 continues from 2808 to 2802. In still other examples, the method 2800 continues from 2802 to 2810 where the plurality of second material polymer matrix composite plies 602 are cut from one or more sheet of second material polymer matrix composite tape 1602. In this and certain other examples, the method 2800 continues from 2810 to 2804. In yet other examples of the method 2800, the forming 2806 of the second stack 1506 and the first stack 1004 includes forming 3902 the second stack 1506 and the first stack 1004 to a top surface 4002 of a forming tool 4004. At 3904, the second stack 1506 and the first stack 1004 are compacted to a top surface 4102 of a compacting tool 4104. In still yet other examples of the method 2800, the forming 2806 of the second stack 1506 and the first stack 1004 includes forming 4202 the second stack 1506 and the first stack 1004 to the top surface 1402 of the layup tool 1404. At 4204, the second stack 1506 and the first stack 1004 are compacted during the forming 4202 to provide a laminate 1502 of the composite fuselage frame 100.

With reference again to Figs. 1-8, 10, 15, 18, 28, 29 and 42, in one or more examples, a method 2900 (see Fig. 29) of fabricating a composite fuselage frame 100 for an aircraft 200 includes the method 2800 of Fig. 28 and continues from 4204 of Fig. 42 to 2902 where the laminate 1502 of the composite fuselage frame 100 is cured to harden the composite fuselage frame 100. In certain other examples of the method 2900, after the curing 2902 of the laminate 1502, the composite fuselage frame 100 includes a web 102 and a flange 1802. The web 102 includes a width 103 and a first predetermined thickness 402. The web 102 forms an arc 104 between a first end 106 and a second end 108 in relation to a fuselage 202 of the aircraft 200. The width 103 extends from an outer side 404 in relation to a skin 204 on the fuselage 202 to an inner side 406. The flange 1802 disposed on the outer side 404 of the web 102 and projecting from the first predetermined thickness 402 of the web 102. In this and certain other examples, the method continues from 2902 where a first mouse hole 110 is cut from the flange 1802 at a first predetermined position and sized to fit over a first stringer 302 on the skin 204. The first predetermined position is based on a first location of the first stringer 302 on the skin 204. At 2906, a second mouse hole 112 is cut from the flange 1802 spaced from the first mouse hole 110 at a second predetermined position and sized to fit over a second stringer 304 adjacent to the first stringer 302 on the skin 204. The second predetermined position is based on a second location of the second stringer 304 on the skin 204.

In still other examples, the composite fuselage frame 100 is configured to provide crosswise support 314 to an interior surface 312 of a skin 204 for a fuselage barrel section 310 with a plurality of stringers 305. The composite fuselage frame 100 spans the plurality of stringers 305. The composite fuselage frame 100 includes a plurality of shear tie feet 114 that extend toward the skin 204 between adjacent stringers 305. Each shear tie foot 114 has a frame filler 802 integrated therein during fabrication of the composite fuselage frame 100 such that the composite fuselage frame 100 includes a plurality of frame fillers 802 integrated within the plurality of shear tie feet 114.

In further examples, the shear tie foot 114 extends from the web 102 between the first mouse hole 110 and the second mouse hole 112 to a distal end 1804 of the flange 1802 and an outer surface 410 of the shear tie foot 114 is configured to face the skin 204 and align with a corresponding portion of the skin 204. In other further examples, the shear tie foot 114 extends from the first predetermined thickness 402 of the web 102 such that a side of the shear tie foot 114 is configured to face the skin 204 and to fit within an area defined by the first stringer 302, the second stringer 304 and a corresponding portion of the skin 204 between the first stringer 302 and the second stringer 304. In yet other further examples, multiple composite fuselage frames 100 form a segmented frame 306 for a slice of the fuselage 202 of the aircraft 200. In still yet other further examples, a portion of the flange 1802 between the first mouse hole 110 and the second mouse hole 112 defines the shear tie foot 114 which includes a second predetermined thickness 408. The first predetermined thickness 402 of the web 102 is defined by a first plurality of first polymer matrix composite layers 502 formed by the plurality of second material polymer matrix composite plies 602. The second predetermined thickness 408 of the shear tie foot 114 is defined by the first predetermined thickness 402 and a second plurality of second polymer matrix composite layers 504 formed by the plurality of first material polymer matrix composite plies 604 that provide the frame filler 802 integrated with the plurality of second material polymer matrix composite plies 602 of the first predetermined thickness 402.

With reference again to Figs. 1, 6-8, 10, 15, 28, in one or more examples, a method of fabricating a frame filler 802 for a composite fuselage frame 100 includes the method 2800 of Fig. 28 and continues from 2802 to integrating the frame filler 802 into the shear tie foot 114 of the composite fuselage frame 100 via clamped arc forming of the second stack 1506 of second material polymer matrix composite plies 602 over the first stack 1004 of first material polymer matrix composite plies 604. Next, the frame filler 802 provided by the first stack 1004 and the shear tie foot 114 provided by the second stack 1506 are co-cured to harden the composite fuselage frame 100.

With reference again to Figs. 1, 6, 10, 14-16, 20, 28 and 30, in one or more examples, a method 3000 (see Fig. 30) of fabricating a frame filler 802 for a composite fuselage frame 100 includes the method 2800 of Fig. 28. At 3002, at least one second material polymer matrix composite ply 602 is laid up on the top surface 1402 of the layup tool 1404 to provide a base portion 2002 of the composite fuselage frame 100 below the first stack 1004 of first material polymer matrix composite plies 604 and the second stack 1506 of second material polymer matrix composite plies 602 prior to the laying up 2802 of the plurality of first material polymer matrix composite plies 604 and the laying up 2804 of the plurality of second material polymer matrix composite plies 602. The method 3000 continues from 3002 to 2802 of Fig. 28. From 2802, the method 3000 continues to 3004 where, after the laying up 2802 of the plurality of first material polymer matrix composite plies 604, the base portion 2002 and the first stack 1004 of first material polymer matrix composite plies 604 are formed to the top surface 1402 of the layup tool 1404. At 3006, the base portion 2002 and the first stack 1004 of first material polymer matrix composite plies 604 are compacted during the forming 3004 to provide a second laminate 2004 of an interim composite fuselage frame 2006. The method 3000 continues from 3006 to 2804 of Fig. 28. In certain other examples, the method 3000 also includes cutting 3008 the at least one second material polymer matrix composite ply 602 from one or more sheet of second material polymer matrix composite tape 1602. In this and certain other examples, the method 3000 continues from 3008 to 3002.

With reference again to Figs. 1, 5, 6, 10, 14, 15, 20, 28, 30 and 38, in one or more examples, a method 3800 (see Fig. 38) of fabricating a frame filler 802 for a composite fuselage frame 100 includes the method 2800 of Fig. 28 and the method 3000 of Fig. 30. The method 3800 continues from 3002 of Fig. 30 to 3802 where an outer protective fiberglass ply 606 is laid up on the top surface 1402 of the layup tool 1404 to provide an outer protective fiberglass layer 506 below the base portion 2002 of the composite fuselage frame 100 and the second stack 1506 of second material polymer matrix composite plies 602 prior to the laying up 2802 of the plurality of first material polymer matrix composite plies 604 and the laying up 2804 of the plurality of second material polymer matrix composite plies 602. The method 3800 continues from 3802 to 2802 of Fig. 28. From 2802, the method 3800 continues to 3804 where, after the laying up 2802 of the plurality of first material polymer matrix composite plies 604, the outer protective fiberglass ply 606, the base portion 2002 and the first stack 1004 of first material polymer matrix composite plies 604 are formed to the top surface 1402 of the layup tool 1404. At 3806, the outer protective fiberglass ply 606, the base portion 2002 and the first stack 1004 of first material polymer matrix composite plies 604 are compacted during the forming 3804 to provide the second laminate 2004 of the interim composite fuselage frame 2006. The method 3800 continues from 3806 to 2804 of Fig. 28.

With reference again to Figs. 1, 5, 6, 10, 14, 15, 20, 28 and 31, in one or more examples, a method 3100 (see Fig. 31) of fabricating a frame filler 802 for a composite fuselage frame 100 includes the method 2800 of Fig. 28. At 3102, an outer protective fiberglass ply 606 is laid up on the top surface 1402 of the layup tool 1404 to provide an outer protective fiberglass layer 506 below the first stack 1004 of first material polymer matrix composite plies 604 and the second stack 1506 of second material polymer matrix composite plies 602 prior to the laying up 2802 of the plurality of first material polymer matrix composite plies 604 and the laying up 2804 of the plurality of second material polymer matrix composite plies 602. The method 3100 continues from 3102 to 2802 and 2804 of Fig. 28. At 3104, after the laying up 2802 of the plurality of first material polymer matrix composite plies 604 and the laying up 2804 of the plurality of second material polymer matrix composite plies 602, the outer protective fiberglass ply 606 along with the second stack 1506 and the first stack 1004 are formed to the top surface 1402 of the layup tool 1404. At 3106, the outer protective fiberglass ply 606 along with the second stack 1506 and the first stack 1004 are compacted during the forming 3104 to provide a laminate 1502 of the composite fuselage frame 100.

With reference again to Figs. 1, 5, 6, 10, 14, 15, 28 and 32, in one or more examples, a method 3200 (see Fig. 32) of fabricating a frame filler 802 for a composite fuselage frame 100 includes the method 2800 of Fig. 28 and continues from 2804 to 3202 where an outer protective fiberglass ply 606 is laid up on the second stack 1506 of second material polymer matrix composite plies 602 and the first stack 1004 of first material polymer matrix composite plies 604 presently on the layup tool 1404 to provide an outer protective fiberglass layer 506 on top of the second stack 1506. At 3204, the outer protective fiberglass ply 606 along with the second stack 1506 and the first stack 1004 are formed to the top surface 1402 of the layup tool 1404. At 3206, the outer protective fiberglass ply 606 along with the second stack 1506 and the first stack 1004 are compacted during the forming 3204 to provide a laminate 1502 of the composite fuselage frame 100.

Referring generally to Figs. 1-8, 10, 14, 15, 18, 33-35, 40, 41, 51 and 52, by way of examples, the present disclosure is directed to a method 3300, 3500 of fabricating a fuselage barrel section 310 for an aircraft 200. Fig. 1 is a perspective view of an example of a composite fuselage frame 100. Fig. 2 is a perspective view of an example of the aircraft 200. Fig. 3 is a perspective view of an example of a partially assembled fuselage barrel section 310. Fig. 4 is a cross-sectional side view of another example of a composite fuselage frame 100. Fig. 5 is another cross-sectional side view of the composite fuselage frame 100 of Fig. 4 showing polymer matrix composite layers 502, 504. Fig. 6 is an exploded front view showing an example of polymer matrix composite layers 502, 504 and outer protective fiberglass layers 506 in yet another example of a composite fuselage frame 100. Fig. 7 is an exploded side view showing the polymer matrix composite layers 502, 504 and outer protective fiberglass layers 506 in the composite fuselage frame 100 of Fig. 6. Fig. 8 is a side view of the composite fuselage frame 100 of Figs. 4 and 5 showing an example of a frame filler 802 (in phantom lines) integrated within the composite fuselage frame 100.

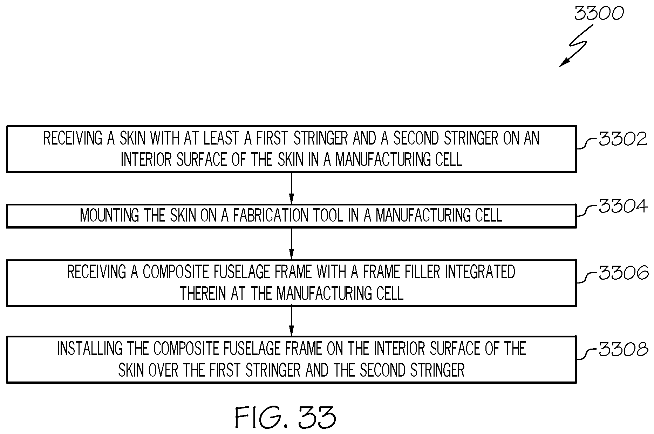

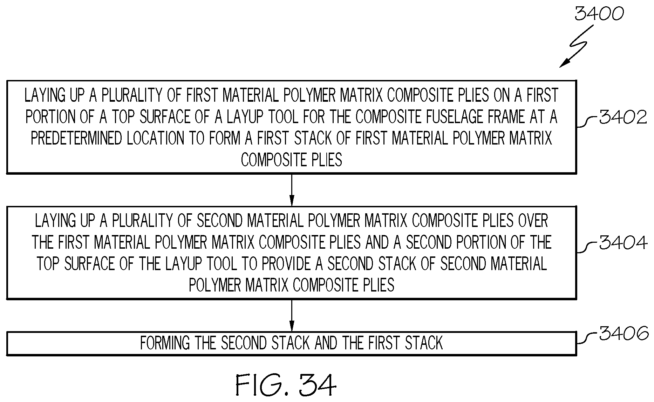

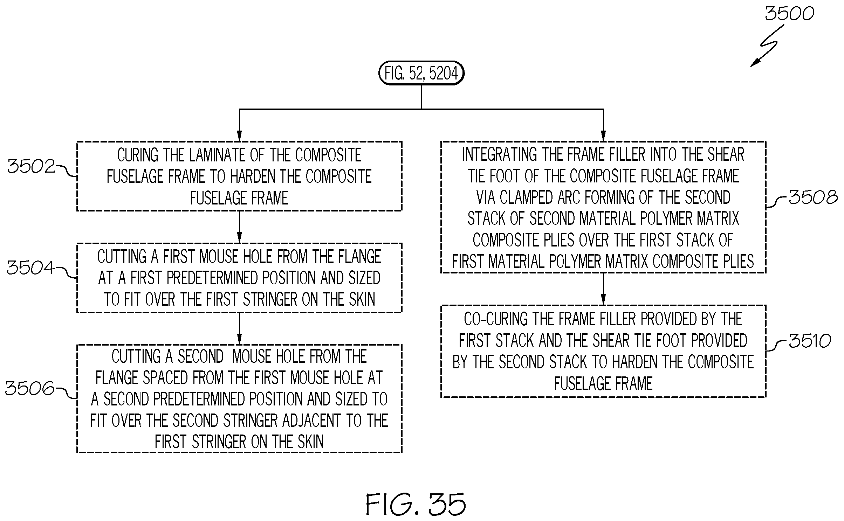

Fig. 10 is an exploded front view showing an example of polymer matrix composite layers 502, 504 in an example of a frame filler 802 for the composite fuselage frame 100 of Figs. 4 and 5. Fig. 14 is a rear view of an example of a layup tool 1404 upon which the laminate 1102 of the frame filler 802 (in phantom lines) of Fig. 8 was placed and over which an example of a second material polymer matrix composite ply 602 was overlaid. Fig. 15 is an exploded side view of the layup tool 1404 of Fig. 14 showing the laminate 1102 of the frame filler 802 (in phantom lines) and an example of a stack of second material polymer matrix composite plies 602 overlaid on the frame filler 802. Fig. 18 is a side view of an example of a laminate 1502 of an example of the composite fuselage frame 100 showing the laminate 1102 of the frame filler 802 in Fig. 11 integrated within the composite fuselage frame 100. Figs. 33 and 34 provide an example of the method 3300 of fabricating a fuselage barrel section 310 for an aircraft 200 that includes fabricating 3400 a composite fuselage frame 100. Fig. 35, in combination with Figs. 33 and 34, provides an example of the method 3500 of fabricating a fuselage barrel section 310 for an aircraft 200 that includes fabricating 3400 a composite fuselage frame 100.

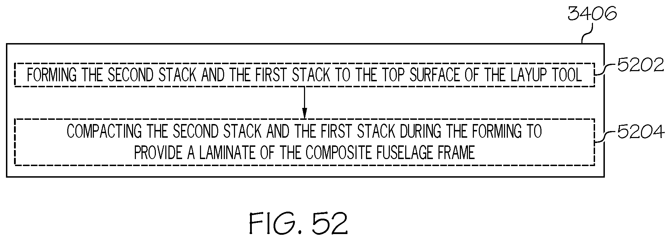

Fig. 40 is a side view of an example of a forming tool 4004 for a composite fuselage frame 100. Fig. 41 is a side view of an example of a compacting tool 4104 for a composite fuselage frame 100. Fig. 51 provides an example of the forming 3406 of the second stack 1506 and the first stack 1004 in Fig. 34. Fig. 52 provides another example of the forming 3406 of the second stack 1506 and the first stack 1004 in Fig. 34.

With reference again to Figs. 1-3, 6-8, 10, 14, 15, 33, 34, 40, 41, 51 and 52, in one or more example, a method 3300 (see Fig. 33) of fabricating a fuselage barrel section 310 for an aircraft 200 includes receiving 3302 a skin 204 with at least a first stringer 302 and a second stringer 304 on an interior surface 312 of the skin 204 in a manufacturing cell. The skin 204 with the first stringer 302 and the second stringer 304 having been previously fabricated and hardened. At 3304, the skin 204 is mounted on a fabrication tool in the manufacturing cell. At 3306, a composite fuselage frame 100 with a frame filler 802 integrated therein is received at the manufacturing cell. The composite fuselage frame 100 having previously been fabricated and hardened. At 3308, the composite fuselage frame 100 is installed on the interior surface 312 of the skin 204 over the first stringer 302 and the second stringer 304. The method 3300 also includes fabricating 3400 (see Fig. 34) the composite fuselage frame 100 which includes laying up 3402 a plurality of first material polymer matrix composite plies 604 on a first portion 1504 of a top surface 1402 of a layup tool 1404 for the composite fuselage frame 100 at a predetermined location to form a first stack 1004 of first material polymer matrix composite plies 604. The predetermined location being associated with the frame filler 802 in relation to a shear tie foot 114 of the composite fuselage frame 100. At 3404, a plurality of second material polymer matrix composite plies 602 are laid up over the first material polymer matrix composite plies 604 and a second portion 1510 of the top surface 1402 of the layup tool 1404 to provide a second stack 1506 of second material polymer matrix composite plies 602. At 3406, the second stack 1506 and the first stack 1004 are formed to the top surface 1402 of the layup tool 1404. At 3408, the second stack 1506 and the first stack 1004 are compacted during the forming 3406 to provide a laminate 1502 of the composite fuselage frame 100.

In certain other examples of the fabricating 3400, the forming 3406 of the second stack 1506 and the first stack 1004 includes forming 5102 the second stack 1506 and the first stack 1004 to a top surface 4002 of a forming tool 4004. At 5102, the second stack 1506 and the first stack 1004 are compacted to a top surface 4102 of a compacting tool 4104. In yet other examples of the fabricating 3400, the forming 3406 of the second stack 1506 and the first stack 1004 includes forming 5202 the second stack 1506 and the first stack 1004 to the top surface 1402 of the layup tool 1404. At 5204, the second stack 1506 and the first stack 1004 are compacted during the forming 5202 to provide a laminate 1502 of the composite fuselage frame 100.

With reference again to Figs. 1-8, 10, 15, 18 and 33-35, in one or more examples, a method 3500 (see Fig. 35) of fabricating a fuselage barrel section 310 for an aircraft 200 includes the method 3300 of Fig. 33 and the fabricating 3400 of the composite fuselage frame 100 of Fig. 34. The method 3500 continues from 5204 of Fig. 52 to 3502 where the fabricating 3400 of the composite fuselage frame 100 also includes curing 3502 the laminate 1502 of the composite fuselage frame 100 to harden the composite fuselage frame 100.

In certain other examples of the method 3500, after the curing 3502 of the laminate 1502, the composite fuselage frame 100 includes a web 102 and a flange 1802. The web 102 includes a width 103 and a first predetermined thickness 402. The web forms an arc 104 between a first end 106 and a second end 108 in relation to a fuselage 202 of the aircraft 200. The width 103 extends from an outer side 404 in relation to a skin 204 on the fuselage 202 to an inner side 406. The flange 1802 disposed on the outer side 404 of the web 102 and projecting from the first predetermined thickness 402 of the web 102. In this and certain other examples, the fabricating 3400 of the composite fuselage frame 100 also includes cutting 3504 a first mouse hole 110 from the flange 1802 at a first predetermined position and sized to fit over the first stringer 302 on the skin 204. The first predetermined position is based on a first location of the first stringer 302 on the skin 204. At 3506, a second mouse hole 112 is cut from the flange 1802 spaced from the first mouse hole 110 at a second predetermined position and sized to fit over the second stringer 304 adjacent to the first stringer 302 on the skin 204. The second predetermined position is based on a second location of the second stringer 304 on the skin 204.

In still other examples, the composite fuselage frame 100 is configured to provide crosswise support 314 to an interior surface 312 of a skin 204 for a fuselage barrel section 310 with a plurality of stringers 305. The composite fuselage frame 100 spans the plurality of stringers 305. The composite fuselage frame 100 includes a plurality of shear tie feet 114 that extend toward the skin 204 between adjacent stringers 305. Each shear tie foot 114 has a frame filler 802 integrated therein during fabrication of the composite fuselage frame 100 such that the composite fuselage frame 100 includes a plurality of frame fillers 802 integrated within the plurality of shear tie feet 114.

In further examples, a portion of the flange 1802 between the first mouse hole 110 and the second mouse hole 112 defines the shear tie foot 114 which includes a second predetermined thickness 408. The first predetermined thickness 402 of the web 102 is defined by a first plurality of first polymer matrix composite layers 502 formed by the plurality of second material polymer matrix composite plies 602. The second predetermined thickness 408 of the shear tie foot 114 is defined by the first predetermined thickness 402 and a second plurality of second polymer matrix composite layers 504 formed by the plurality of first material polymer matrix composite plies 604 that provide the frame filler 802 integrated with the plurality of second material polymer matrix composite plies 602 of the first predetermined thickness 402.

In other further examples, the fabricating 3400 of the composite fuselage frame 100 also includes integrating 3508 the frame filler 802 into the shear tie foot 114 of the composite fuselage frame 100 via clamped arc forming of the second stack 1506 of second material polymer matrix composite plies 602 over the first stack 1004 of first material polymer matrix composite plies 604. At 3510, the frame filler 802 provided by the first stack 1004 and the shear tie foot 114 provided by the second stack 1506 are co-cured to harden the composite fuselage frame 100.

Examples of composite fuselage frames 100, methods 900, 1300, 1700, 1900, 2100, 2200, 2300, 2400, 2500, 2600, 2700 of fabricating frame fillers 802 for composite fuselage frames 100, methods 2800, 2900, 3000, 3100, 3200, 3800 of fabricating composite fuselage frames 100 for aircraft 200 and methods 3300, 3500 of fabricating fuselage barrel sections 310 for aircraft 200 may be related to or used in the context of aircraft manufacturing. Although aircraft examples are described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. The phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-8, 10-12, 14-16, 18 and 20, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1-8, 10-12, 14-16, 18 and 20, referred to above, need be included in every example and not all elements, features and/or components described herein are necessarily depicted in each illustrative example. Accordingly, some of the elements, features and/or components described and illustrated in Figs. 1-8, 10-12, 14-16, 18 and 20 may be combined in various ways without the need to include other features described and illustrated in Figs. 1-8, 10-12, 14-16, 18 and 20, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1-8, 10-12, 14-16, 18 and 20, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1-8, 10-12, 14-16, 18 and 20 and such elements, features and/or components may not be discussed in detail herein with reference to each of Figs. 1-8, 10-12, 14-16, 18 and 20. Similarly, all elements, features and/or components may not be labeled in each of Figs. 1-8, 10-12, 14-16, 18 and 20, but reference numerals associated therewith may be utilized herein for consistency.

In Figs. 9, 13, 17, 19 and 21-35, referred to above, the blocks may represent operations, steps and/or portions thereof, and lines connecting the various blocks do not imply any particular order or dependency of the operations or portions thereof. It will be understood that not all dependencies among the various disclosed operations are necessarily represented. Figs. 9, 13, 17, 19 and 21-35 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

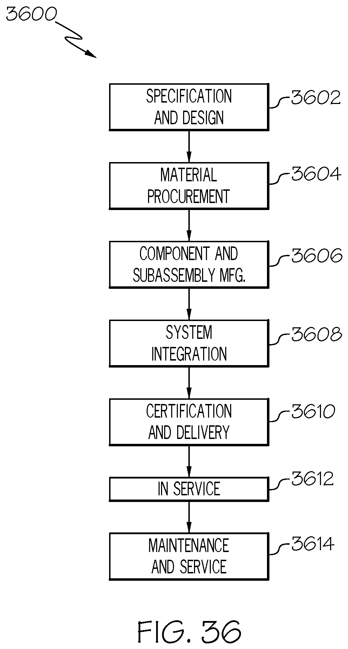

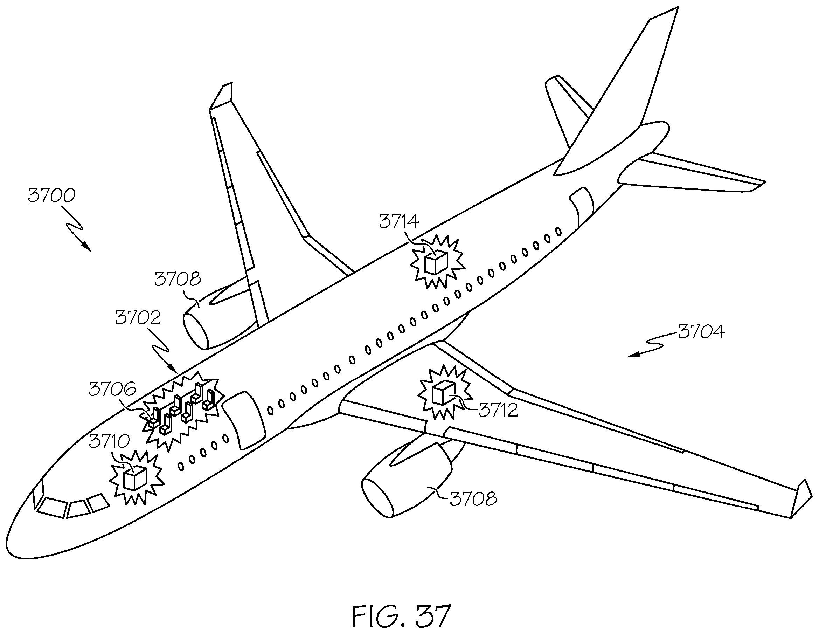

Examples of the subject matter disclosed herein may be described in the context of aircraft manufacturing and service method 3600 as shown in Fig. 36 and aircraft 3700 as shown in Fig. 37. In one or more examples, the disclosed composite fuselage frames 100, methods 900, 1300, 1700, 1900, 2100, 2200, 2300, 2400, 2500, 2600, 2700 of fabricating frame fillers 802 for composite fuselage frames 100, methods 2800, 2900, 3000, 3100, 3200, 3800 of fabricating composite fuselage frames 100 for aircraft 200 and methods 3300, 3500 of fabricating fuselage barrel sections 310 for aircraft 200 may be used in aircraft manufacturing. During pre-production, the service method 3600 may include specification and design (block 3602) of aircraft 3700 and material procurement (block 3604). During production, component and subassembly manufacturing (block 3606) and system integration (block 3608) of aircraft 3700 may take place. Thereafter, aircraft 3700 may go through certification and delivery (block 3610) to be placed in service (block 3612). While in service, aircraft 3700 may be scheduled for routine maintenance and service (block 3614). Routine maintenance and service may include modification, reconfiguration, refurbishment, etc. of one or more systems of aircraft 3700.

Each of the processes of the service method 3600 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 37, aircraft 3700 produced by the service method 3600 may include airframe 3702 with a plurality of high-level systems 3704 and interior 3706. Examples of high-level systems 3704 include one or more of propulsion system 3708, electrical system 3710, hydraulic system 3712 and environmental system 3714. Any number of other systems may be included. Although aerospace examples are in other shown, the principles disclosed herein may be applied to other industries, such as the automotive industry. Accordingly, in addition to aircraft 3700, the principles disclosed herein may apply to other vehicles, e.g., land vehicles, marine vehicles, space vehicles, etc.

The disclosed composite fuselage frames 100, methods 900, 1300, 1700, 1900, 2100, 2200, 2300, 2400, 2500, 2600, 2700 of fabricating frame fillers 802 for composite fuselage frames 100, methods 2800, 2900, 3000, 3100, 3200, 3800 of fabricating composite fuselage frames 100 for aircraft 200 and methods 3300, 3500 of fabricating fuselage barrel sections 310 for aircraft 200 may be employed during any one or more of the stages of the manufacturing and service method 3600. For example, components or subassemblies corresponding to component and subassembly manufacturing (block 3606) may be fabricated or manufactured in a manner similar to components or subassemblies produced while aircraft 3700 is in service (block 3612). Also, one or more example of the system(s), method(s), or combination thereof may be utilized during production stages (block 3606 and block 3608), for example, by expediting or substantially expediting assembly of or reducing the cost of aircraft 3700. Similarly, one or more example of the system or method realizations, or a combination thereof, may be utilized, for example and without limitation, while aircraft 3700 is in service (block 3612) and/or during maintenance and service (block 3614).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, various examples of the composite fuselage frames 100, methods 900, 1300, 1700, 1900, 2100, 2200, 2300, 2400, 2500, 2600, 2700 of fabricating frame fillers 802 for composite fuselage frames 100, methods 2800, 2900, 3000, 3100, 3200, 3800 of fabricating composite fuselage frames 100 for aircraft 200 and methods 3300, 3500 of fabricating fuselage barrel sections 310 for aircraft 200 have been shown and described, modifications may occur to those skilled in the art upon reading the specification. The present application includes such modifications and is limited only by the scope of the claims.

Further examples are set out in the following clauses.

Clause 1. A method of fabricating a composite fuselage frame for an aircraft, comprising: laying up a plurality of first material polymer matrix composite plies on a first portion of a top surface of a layup tool for the composite fuselage frame at a predetermined location to form a first stack of first material polymer matrix composite plies, the predetermined location being associated with a frame filler in relation to a shear tie foot of the composite fuselage frame; laying up a plurality of second material polymer matrix composite plies over the first material polymer matrix composite plies and a second portion of the top surface of the layup tool to provide a second stack of second material polymer matrix composite plies; and forming the second stack and the first stack.

Clause 2. The method of Clause 1 wherein the first material polymer matrix composite plies comprise at least one of thermoset matrix composite plies and thermoplastic matrix composite plies.

Clause 3. The method of Clause 1 or 2 wherein the first material polymer matrix composite plies comprise a reinforcement fabric and polymer matrix material.

Clause 4. The method of Clause 3 wherein the reinforcement fabric comprises at least one of a plain weave fabric, a 0/90-degree weave fabric and a 45-degree weave fabric.

Clause 5. The method of Clause 3 or 4 wherein the reinforcement fabric comprises woven reinforcement fibers that are interwoven in at least two directions.

Clause 6. The method of Clause 5 wherein the woven reinforcement fibers comprise at least one of glass fibers, carbon fibers, aramid fibers, natural fibers and polyetheretherketone fibers.

Clause 7. The method of any of Clauses 3 to 6 wherein the polymer matrix material comprises at least one of a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin and a polyetheretherketone resin.

Clause 8. The method of any of Clauses 1 to 7 wherein the second material polymer matrix composite plies comprise at least one of thermoset matrix composite plies and thermoplastic matrix composite plies.

Clause 9. The method of any of Clauses 1 to 8 wherein the second material polymer matrix composite plies comprise unidirectional reinforcement fibers and polymer matrix material.

Clause 10. The method of Clause 9 wherein the unidirectional reinforcement fibers comprise at least one of carbon fibers, glass fibers, aramid fibers, natural fibers and polyetheretherketone fibers.

Clause 11. The method of Clause 9 or 10 wherein the polymer matrix material comprises at least one of a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin and a polyetheretherketone resin.

Clause 12. The method of any of Clauses 1 to 11 wherein the composite fuselage frame further comprises a one-piece section.

Clause 13. The method of any of Clauses 1 to 12, further comprising: cutting the plurality of first material polymer matrix composite plies from one or more sheet of first material polymer matrix composite fabric.

Clause 14. The method of any of Clauses 1 to 13, further comprising: cutting the plurality of second material polymer matrix composite plies from one or more sheet of second material polymer matrix composite tape.

Clause 15. The method of any of Clauses 1 to 14, the forming of the second stack and the first stack comprising: forming the second stack and the first stack to a top surface of a forming tool; and compacting the second stack and the first stack to a top surface of a compacting tool.

Clause 16. The method of Clause 1, the forming of the second stack and the first stack comprising: forming the second stack and the first stack to the top surface of the layup tool; and compacting the second stack and the first stack during the forming to provide a laminate of the composite fuselage frame.

Clause 17. The method of Clause 16, further comprising: curing the laminate of the composite fuselage frame to harden the composite fuselage frame.

Clause 18. The method of Clause 17 wherein, after the curing of the laminate, the composite fuselage frame comprises a web and a flange, the web comprising a width and a first predetermined thickness and forming an arc between a first end and a second end in relation to a fuselage of the aircraft, the width extending from an outer side in relation to a skin on the fuselage to an inner side, the flange disposed on the outer side of the web and projecting from the first predetermined thickness of the web, the method further comprising: cutting a first mouse hole from the flange at a first predetermined position and sized to fit over a first stringer on the skin, the first predetermined position based on a first location of the first stringer on the skin; and cutting a second mouse hole from the flange spaced from the first mouse hole at a second predetermined position and sized to fit over a second stringer adjacent to the first stringer on the skin, the second predetermined position based on a second location of the second stringer on the skin.

Clause 19. The method of Clause 18 wherein the composite fuselage frame is configured to provide crosswise support to an interior surface of a skin for a fuselage barrel section with a plurality of stringers, the composite fuselage frame spanning the plurality of stringers, the composite fuselage frame comprising a plurality of shear tie feet that extend toward the skin between adjacent stringers, each shear tie foot having a frame filler integrated therein during fabrication of the composite fuselage frame such that the composite fuselage frame comprises a plurality of frame fillers integrated within the plurality of shear tie feet.

Clause 20. The method of Clause 18 or 19 wherein the shear tie foot extends from the web between the first mouse hole and the second mouse hole to a distal end of the flange and an outer surface of the shear tie foot is configured to face the skin and align with a corresponding portion of the skin.

Clause 21. The method of any of Clauses 18 to 20 wherein the shear tie foot extends from the first predetermined thickness of the web such that a side of the shear tie foot is configured to face the skin and to fit within an area defined by the first stringer, the second stringer and a corresponding portion of the skin between the first stringer and the second stringer.

Clause 22. The method of any of Clauses 18 to 21 wherein multiple composite fuselage frames form a segmented frame for a slice of the fuselage of the aircraft.

Clause 23. The method of any of Clauses 18 to 22 wherein a portion of the flange between the first mouse hole and the second mouse hole defines the shear tie foot which comprises a second predetermined thickness, wherein the first predetermined thickness of the web is defined by a first plurality of first polymer matrix composite layers formed by the plurality of second material polymer matrix composite plies, wherein the second predetermined thickness of the shear tie foot is defined by the first predetermined thickness and a second plurality of second polymer matrix composite layers formed by the plurality of first material polymer matrix composite plies that provide the frame filler integrated with the plurality of second material polymer matrix composite plies of the first predetermined thickness.

Clause 24. The method of any of Clauses 1 to 23, further comprising: integrating the frame filler into the shear tie foot of the composite fuselage frame via clamped arc forming of the second stack of second material polymer matrix composite plies over the first stack of first material polymer matrix composite plies; and co-curing the frame filler provided by the first stack and the shear tie foot provided by the second stack to harden the composite fuselage frame.

Clause 25. The method of any of Clauses 1 to 24, further comprising: laying up at least one second material polymer matrix composite ply on the top surface of the layup tool to provide a base portion of the composite fuselage frame below the first stack of first material polymer matrix composite plies and the second stack of second material polymer matrix composite plies prior to the laying up of the plurality of first material polymer matrix composite plies and the laying up of the plurality of second material polymer matrix composite plies; after the laying up of the plurality of first material polymer matrix composite plies, forming the base portion and the first stack of first material polymer matrix composite plies to the top surface of the layup tool; and compacting the base portion and the first stack of first material polymer matrix composite plies during the forming to provide a second laminate of an interim composite fuselage frame.

Clause 26. The method of Clause 25, further comprising: cutting the at least one second material polymer matrix composite ply from one or more sheet of second material polymer matrix composite tape.

Clause 27. The method of Clause 25 or 26, further comprising: laying up an outer protective fiberglass ply on the top surface of the layup tool to provide an outer protective fiberglass layer below the base portion of the composite fuselage frame and the second stack of second material polymer matrix composite plies prior to the laying up of the plurality of first material polymer matrix composite plies and the laying up of the plurality of second material polymer matrix composite plies; after the laying up of the plurality of first material polymer matrix composite plies, forming the outer protective fiberglass ply, the base portion and the first stack of first material polymer matrix composite plies to the top surface of the layup tool; and compacting the outer protective fiberglass ply, the base portion and the first stack of first material polymer matrix composite plies during the forming to provide the second laminate of the interim composite fuselage frame.

Clause 28. The method of any of Clauses 1 to 27, further comprising: laying up an outer protective fiberglass ply on the top surface of the layup tool to provide an outer protective fiberglass layer below the first stack of first material polymer matrix composite plies and the second stack of second material polymer matrix composite plies prior to the laying up of the plurality of first material polymer matrix composite plies and the laying up of the plurality of second material polymer matrix composite plies; after the laying up of the plurality of first material polymer matrix composite plies and the laying up of the plurality of second material polymer matrix composite plies, forming the outer protective fiberglass ply along with the second stack and the first stack to the top surface of the layup tool; and compacting the outer protective fiberglass ply along with the second stack and the first stack during the forming to provide a laminate of the composite fuselage frame.

Clause 29. The method of any of Clauses 1 to 28, further comprising: laying up an outer protective fiberglass ply on the second stack of second material polymer matrix composite plies and the first stack of first material polymer matrix composite plies presently on the layup tool to provide an outer protective fiberglass layer on top of the second stack; forming the outer protective fiberglass ply along with the second stack and the first stack to the top surface of the layup tool; and compacting the outer protective fiberglass ply along with the second stack and the first stack during the forming to provide a laminate of the composite fuselage frame.

Clause 30. A method of fabricating a frame filler for a composite fuselage frame, comprising: laying up a plurality of first material polymer matrix composite plies on a first layup tool for the frame filler to provide a first stack of first material polymer matrix composite plies on a first top surface of the first layup tool; and forming the first stack.

Clause 31. The method of Clause 30 wherein the first material polymer matrix composite plies comprise at least one of thermoset matrix composite plies and thermoplastic matrix composite plies.

Clause 32. The method of Clause 30 or 31 wherein the first material polymer matrix composite plies comprise a reinforcement fabric and polymer matrix material.

Clause 33. The method of Clause 32 wherein the reinforcement fabric comprises at least one of a plain weave fabric, a 0/90-degree weave fabric and a 45-degree weave fabric.

Clause 34. The method of Clause 32 or 33 wherein the reinforcement fabric comprises woven reinforcement fibers that are interwoven in at least two directions.

Clause 35. The method of Clause 34 wherein the woven reinforcement fibers comprise at least one of glass fibers, carbon fibers, aramid fibers, natural fibers and polyetheretherketone fibers.

Clause 36. The method of any of Clauses 32 to 35 wherein the polymer matrix material comprises at least one of a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin and a polyetheretherketone resin.

Clause 37. The method of any of Clauses 30 to 36 wherein the composite fuselage frame further comprises a one-piece section.

Clause 38. The method of any of Clauses 30 to 37, further comprising: cutting the plurality of first material polymer matrix composite plies from one or more sheet of first material polymer matrix composite fabric.

Clause 39. The method of any of Clauses 30 to 38, the forming of the first stack comprising: forming the first stack to a top surface of a forming tool; and compacting the first stack to a top surface of a compacting tool.

Clause 40. The method of any of Clauses 30 to 39, the forming of the first stack comprising: forming the first stack to the first top surface of the first layup tool; and compacting the first stack during the forming to provide a first laminate of the frame filler.

Clause 41. The method of Clause 40, further comprising: removing the first laminate of the frame filler from the first layup tool; placing the first laminate on a first portion of a second top surface of a second layup tool for the composite fuselage frame at a predetermined location associated with the frame filler in relation to a shear tie foot of the composite fuselage frame; laying up a plurality of second material polymer matrix composite plies over the first laminate and a second portion of the second top surface of the second layup tool to provide a second stack of second material polymer matrix composite plies; and forming the second stack and the first laminate.

Clause 42. The method of Clause 41 wherein the second material polymer matrix composite plies comprise at least one of thermoset matrix composite plies and thermoplastic matrix composite plies.

Clause 43. The method of Clause 41 or 42 wherein the second material polymer matrix composite plies comprise unidirectional reinforcement fibers and polymer matrix material.

Clause 44. The method of Clause 43 wherein the unidirectional reinforcement fibers comprise at least one of carbon fibers, glass fibers, aramid fibers, natural fibers and polyetheretherketone fibers.

Clause 45. The method of Clause 43 or 44 wherein the polymer matrix material comprises at least one of a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin and a polyetheretherketone resin.

Clause 46. The method of any of Clauses 41 to 45, further comprising: cutting the plurality of second material polymer matrix composite plies from one or more sheet of second material polymer matrix composite tape.

Clause 47. The method of any of Clauses 41 to 46, the forming of the second stack and the first stack comprising: forming the second stack and the first laminate to a top surface of a forming tool; and compacting the second stack and the first laminate to a top surface of a compacting tool.

Clause 48. The method of Clause 41, the forming of the second stack and the first stack comprising: forming the second stack and the first laminate to the second top surface of the second layup tool; and compacting the second stack and the first laminate during the forming to provide a second laminate of the composite fuselage frame.

Clause 49. The method of Clause 48, further comprising: curing the second laminate of the composite fuselage frame to harden the composite fuselage frame.

Clause 50. The method of Clause 49 wherein, after the curing of the second laminate, the composite fuselage frame comprises a web and a flange, the web comprising a width and a first predetermined thickness and forming an arc between a first end and a second end in relation to a fuselage of an aircraft, the width extending from an outer side in relation to a skin on the fuselage to an inner side, the flange disposed on the outer side of the web and projecting from the first predetermined thickness of the web, the method further comprising: cutting a first mouse hole from the flange at a first predetermined position and sized to fit over a first stringer on the skin of the fuselage, the first predetermined position based on a first location of the first stringer on the skin; and cutting a second mouse hole from the flange spaced from the first mouse hole at a second predetermined position and sized to fit over a second stringer on the skin adjacent to the first stringer, the second predetermined position based on a second location of the second stringer on the skin.

Clause 51. The method of Clause 50 wherein the composite fuselage frame is configured to provide crosswise support to an interior surface of a skin for a fuselage barrel section with a plurality of stringers, the composite fuselage frame spanning the plurality of stringers, the composite fuselage frame comprising a plurality of shear tie feet that extend toward the skin between adjacent stringers, each shear tie foot having a frame filler integrated therein during fabrication of the composite fuselage frame such that the composite fuselage frame comprises a plurality of frame fillers integrated within the plurality of shear tie feet.

Clause 52. The method of Clause 50 or 51 wherein the shear tie foot extends from the web between the first mouse hole and the second mouse hole to a distal end of the flange and an outer surface of the shear tie foot is configured to face the skin and align with a corresponding portion of the skin.

Clause 53. The method of any of Clauses 50 to 52 wherein the shear tie foot extends from the first predetermined thickness of the web such that a side of the shear tie foot is configured to face the skin and to fit within an area defined by the first stringer, the second stringer and a corresponding portion of the skin between the first stringer and the second stringer.

Clause 54. The method of any of Clauses 50 to 53 wherein multiple composite fuselage frames form a segmented frame for a slice of the fuselage of the aircraft.

Clause 55. The method of any of Clauses 50 to 54 wherein a portion of the flange between the first mouse hole and the second mouse hole defines the shear tie foot which comprises a second predetermined thickness, wherein the first predetermined thickness of the web is defined by a first plurality of first polymer matrix composite layers formed by the plurality of second material polymer matrix composite plies, wherein the second predetermined thickness of the shear tie foot is defined by the first predetermined thickness and a second plurality of second polymer matrix composite layers formed by the plurality of first material polymer matrix composite plies that provide the frame filler integrated with the plurality of second material polymer matrix composite plies of the first predetermined thickness.

Clause 56. The method of any of Clauses 41 to 55, further comprising: integrating the frame filler into the shear tie foot of the composite fuselage frame via clamped arc forming of the second stack of second material polymer matrix composite plies over the first stack of first material polymer matrix composite plies; and co-curing the frame filler provided by the first stack and the shear tie foot provided by the second stack to harden the composite fuselage frame.

Clause 57. The method of any of Clauses 41 to 56, further comprising: laying up at least one second material polymer matrix composite ply on the second top surface of the second layup tool to provide a base portion of the composite fuselage frame below the first laminate of the frame filler prior to the placing of the first laminate and the laying up of the plurality of second material polymer matrix composite plies; after the placing of the first laminate, forming the base portion and the first laminate to the second top surface of the second layup tool; and compacting the base portion and the first laminate during the forming to provide a second laminate of an interim composite fuselage frame.

Clause 58. The method of Clause 57, further comprising: cutting the at least one second material polymer matrix composite ply from one or more sheet of second material polymer matrix composite tape.

Clause 59. The method of any of Clauses 41 to 58, further comprising: laying up an outer protective fiberglass ply on the second top surface of the second layup tool to provide an outer protective fiberglass layer below the first laminate of the frame filler prior to the placing of the first laminate and the laying up of the plurality of second material polymer matrix composite plies; after the placing of the first laminate and the laying up of the plurality of second material polymer matrix composite plies, forming the outer protective fiberglass ply along with the second stack of second material polymer matrix composite plies and the first laminate to the second top surface of the second layup tool; and compacting the outer protective fiberglass ply along with the second stack and the first laminate during the forming to provide a second laminate of the composite fuselage frame.

Clause 60. The method of any of Clauses 30 to 59, further comprising: laying up an outer protective fiberglass ply on the second stack of second material polymer matrix composite plies and the first laminate of the frame filler presently on the second layup tool to provide an outer protective fiberglass layer on top of the second stack; forming the outer protective fiberglass ply along with the second stack and the first laminate to the second top surface of the second layup tool; and compacting the outer protective fiberglass ply along with the second stack and the first laminate during the forming to provide a second laminate of the composite fuselage frame.

Clause 61. The method of any of Clauses 40 to 60, further comprising: removing the first laminate of the frame filler from the first layup tool; laying up at least one second material polymer matrix composite ply on a second top surface of a second layup tool for the composite fuselage frame to provide a base portion of the composite fuselage frame; placing the first laminate on the base portion at a predetermined location associated with the frame filler in relation to a shear tie foot of the composite fuselage frame; and forming the base portion and the first laminate.

Clause 62. The method of Clause 61, further comprising: cutting the at least one second material polymer matrix composite ply from one or more sheet of second material polymer matrix composite tape.

Clause 63. The method of Clause 61 or 62, the forming of the base portion and the first laminate comprising: forming the base portion and the first laminate to a top surface of a forming tool; and compacting the base portion and the first laminate to a top surface of a compacting tool.

Clause 64. The method of any of Clauses 61 to 63, the forming of the base portion and the first laminate comprising: forming the base portion and the first laminate to the second top surface of the second layup tool; and compacting the base portion and the first laminate during the forming to provide a second laminate of an interim composite fuselage frame.

Clause 65. The method of any of Clauses 61 to 64, further comprising: laying up an outer protective fiberglass ply on the second top surface of the second layup tool to provide an outer protective fiberglass layer below the base portion of the composite fuselage frame; forming the outer protective fiberglass ply along with the base portion and the first laminate to the second top surface of the second layup tool; and compacting the outer protective fiberglass ply along with the base portion and the first laminate during the forming to provide a second laminate of an interim composite fuselage frame.

Clause 66. The method of Clause 64 or 65, further comprising: laying up a plurality of second material polymer matrix composite plies on the second laminate of the interim composite fuselage frame presently on the second layup tool to provide a second stack of second material polymer matrix composite plies on the second laminate; forming the second stack to a third top surface of the second laminate with the first laminate of the frame filler integrated therein; and compacting the second stack and the second laminate of the interim composite fuselage frame during the forming to provide a third laminate of the composite fuselage frame.

Clause 67. The method of Clause 66, further comprising: cutting the plurality of second material polymer matrix composite plies from one or more sheet of second material polymer matrix composite tape.

Clause 68. The method of Clause 66 or 67, further comprising: curing the third laminate of the composite fuselage frame to harden the composite fuselage frame.

Clause 69. The method of Clause 68 wherein, after the curing of the third laminate, the composite fuselage frame comprises a web and a flange, the web comprising a width and a first predetermined thickness and forming an arc between a first end and a second end in relation to a fuselage of an aircraft, the width extending from an outer side in relation to a skin on the fuselage to an inner side, the flange disposed on the outer side of the web and projecting from the first predetermined thickness of the web, the method further comprising: cutting a first mouse hole from the flange at a first predetermined position and sized to fit over a first stringer on the skin of the fuselage, the first predetermined position based on a first location of the first stringer on the skin; and cutting a second mouse hole from the flange spaced from the first mouse hole at a second predetermined position and sized to fit over a second stringer on the skin adjacent to the first stringer, the second predetermined position based on a second location of the second stringer on the skin.

Clause 70. The method of Clause 69 wherein the composite fuselage frame is configured to provide crosswise support to an interior surface of a skin for a fuselage barrel section with a plurality of stringers, the composite fuselage frame spanning the plurality of stringers, the composite fuselage frame comprising a plurality of shear tie feet that extend toward the skin between adjacent stringers, each shear tie foot having a frame filler integrated therein during fabrication of the composite fuselage frame such that the composite fuselage frame comprises a plurality of frame fillers integrated within the plurality of shear tie feet.

Clause 71. The method of any of Clauses 66 to 70, further comprising: laying up an outer protective fiberglass ply on the third laminate of the composite fuselage frame presently on the second layup tool to provide an outer protective fiberglass layer on top of the third laminate; forming the outer protective fiberglass ply along with the second stack of second material polymer matrix composite plies to the third top surface of the second laminate of the interim composite fuselage frame with the first laminate of the frame filler integrated therein; and compacting the outer protective fiberglass ply along with the second stack of second material polymer matrix composite plies and the second laminate during the forming to provide the third laminate of the composite fuselage frame.

Clause 72. The method of any of Clauses 66 to 71, further comprising: integrating the frame filler into the shear tie foot of the composite fuselage frame via clamped arc forming of the second stack of second material polymer matrix composite plies over the first stack of first material polymer matrix composite plies; and co-curing the frame filler provided by the first stack and the shear tie foot provided by the second stack to harden the composite fuselage frame.

Clause 73. A composite fuselage frame for an aircraft, comprising: a web comprising a width and a first predetermined thickness and forming an arc between a first end and a second end in relation to a fuselage of the aircraft, the width extending from an outer side in relation to a skin on the fuselage to an inner side; and a shear tie foot disposed on the outer side of the web between a first mouse hole and a second mouse hole and projecting from the first predetermined thickness of the web, the shear tie foot having a second predetermined thickness that extends along the skin of the aircraft between a first stringer and a second stringer, and wherein the second predetermined thickness of the shear tie foot is defined by the first predetermined thickness and a second plurality of second polymer matrix composite layers formed by a plurality of first material polymer matrix composite plies that provide a frame filler integrated with a plurality of second material polymer matrix composite plies of the first predetermined thickness.

Clause 74. The composite fuselage frame of Clause 73, further comprising: the first mouse hole disposed on the outer side of the web and sized to fit over the first stringer on the skin; and the second mouse hole spaced from the first mouse hole on the outer side of the web and sized to fit over the second stringer adjacent to the first stringer on the skin of the fuselage.

Clause 75. The composite fuselage frame of Clause 74 wherein the composite fuselage frame is configured to provide crosswise support to an interior surface of a skin for a fuselage barrel section with a plurality of stringers, the composite fuselage frame spanning the plurality of stringers, the composite fuselage frame comprising a plurality of shear tie feet that extend toward the skin between adjacent stringers, each shear tie foot having a frame filler integrated therein during fabrication of the composite fuselage frame such that the composite fuselage frame comprises a plurality of frame fillers integrated within the plurality of shear tie feet.

Clause 76. The composite fuselage frame of any of Clauses 73 to 75 further comprising: a flange connected to the web which in turn is connected to the shear tie foot, wherein the shear tie foot comprises the frame filler added to the flange, the frame filler being equal to a thickness of stringer flanges on the first stringer and the second stringer.

Clause 77. The composite fuselage frame of any of Clauses 73 to 76 wherein the first predetermined thickness of the web is defined by a first plurality of first polymer matrix composite layers formed by the plurality of second material polymer matrix composite plies.

Clause 78. The composite fuselage frame of any of Clauses 73 to 77 wherein the shear tie foot extends from the web to a distal end of the shear tie foot and an outer surface of the shear tie foot is configured to face the skin and align with a corresponding portion of the skin.

Clause 79. The composite fuselage frame of any of Clauses 73 to 78 wherein the shear tie foot extends from the first predetermined thickness of the web such that a side of the shear tie foot is configured to face the skin and to fit within an area defined by the first stringer, the second stringer and a corresponding portion of the skin between the first stringer and the second stringer.

Clause 80. The composite fuselage frame of any of Clauses 73 to 79 wherein the second material polymer matrix composite plies comprise at least one of thermoset matrix composite plies and thermoplastic matrix composite plies.

Clause 81. The composite fuselage frame of any of Clauses 73 to 80 wherein the second material polymer matrix composite plies comprise unidirectional reinforcement fibers and polymer matrix material.

Clause 82. The composite fuselage frame of Clause 81 wherein the unidirectional reinforcement fibers comprise at least one of carbon fibers, glass fibers, aramid fibers, natural fibers and polyetheretherketone fibers.

Clause 83. The composite fuselage frame of Clause 81 or 82 wherein the polymer matrix material comprises at least one of a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin and a polyetheretherketone resin.

Clause 84. The composite fuselage frame of any of Clauses 73 to 83 wherein the first material polymer matrix composite plies comprise at least one of thermoset matrix composite plies and thermoplastic matrix composite plies.

Clause 85. The composite fuselage frame of any of Clauses 73 to 84 wherein the first material polymer matrix composite plies comprise a reinforcement fabric and polymer matrix material.

Clause 86. The composite fuselage frame of Clause 85 wherein the reinforcement fabric comprises at least one of a plain weave fabric, a 0/90-degree weave fabric and a 45-degree weave fabric.

Clause 87. The composite fuselage frame of Clause 85 or 86 wherein the reinforcement fabric comprises woven reinforcement fibers that are interwoven in at least two directions.

Clause 88. The composite fuselage frame of Clause 87 wherein the woven reinforcement fibers comprise at least one of glass fibers, carbon fibers, aramid fibers, natural fibers and polyetheretherketone fibers.

Clause 89. The composite fuselage frame of any of Clauses 85 to 88 wherein the polymer matrix material comprises at least one of a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin and a polyetheretherketone resin.

Clause 90. The composite fuselage frame of any of Clauses 73 to 89 wherein the web and the shear tie foot further comprise outer protective fiberglass layers extending between the first end and the second end of the web and extending along an inner surface and an outer surface of the shear tie foot between the first mouse hole and the second mouse hole, the outer protective fiberglass layers formed by outer protective fiberglass plies.

Clause 91. The composite fuselage frame of any of Clauses 73 to 90, further comprising a one-piece section.

Clause 92. The composite fuselage frame of any of Clauses 73 to 91 wherein multiple composite fuselage frames form a segmented frame for a slice of the fuselage of the aircraft.

Clause 93. A method of fabricating a fuselage barrel section for an aircraft, the method comprising: receiving a skin with at least a first stringer and a second stringer on an interior surface of the skin in a manufacturing cell, the skin with the first stringer and the second stringer having previously been fabricated and hardened; mounting the skin on a fabrication tool in the manufacturing cell; receiving a composite fuselage frame with a frame filler integrated therein at the manufacturing cell, the composite fuselage frame having previously been fabricated; and installing the composite fuselage frame on the interior surface of the skin over the first stringer and the second stringer.

Clause 94. The method of Clause 93, wherein fabricating the composite fuselage frame comprises: laying up a plurality of first material polymer matrix composite plies on a first portion of a top surface of a layup tool for the composite fuselage frame at a predetermined location to form a first stack of first material polymer matrix composite plies, the predetermined location being associated with the frame filler in relation to a shear tie foot of the composite fuselage frame; laying up a plurality of second material polymer matrix composite plies over the first material polymer matrix composite plies and a second portion of the top surface of the layup tool to provide a second stack of second material polymer matrix composite plies; and forming the second stack and the first stack.

Clause 95. The method of Clause 94, the forming of the second stack and the first stack comprising: forming the second stack and the first stack to a top surface of a forming tool; and compacting the second stack and the first stack to a top surface of a compacting tool.

Clause 96. The method of Clause 94 or 95, the forming of the second stack and the first stack comprising: forming the second stack and the first stack to the top surface of the layup tool; and compacting the second stack and the first stack during the forming to provide a laminate of the composite fuselage frame.

Clause 97. The method of Clause 96, the fabricating of the composite fuselage frame further comprising: curing the laminate of the composite fuselage frame to harden the composite fuselage frame.

Clause 98. The method of Clause 97 wherein, after the curing of the laminate, the composite fuselage frame comprises a web and a flange, the web comprising a width and a first predetermined thickness and forming an arc between a first end and a second end in relation to a fuselage of the aircraft, the width extending from an outer side in relation to a skin on the fuselage to an inner side, the flange disposed on the outer side of the web and projecting from the first predetermined thickness of the web, the fabricating of the composite fuselage frame further comprising: cutting a first mouse hole from the flange at a first predetermined position and sized to fit over the first stringer on the skin, the first predetermined position based on a first location of the first stringer on the skin; and cutting a second mouse hole from the flange spaced from the first mouse hole at a second predetermined position and sized to fit over the second stringer adjacent to the first stringer on the skin, the second predetermined position based on a second location of the second stringer on the skin.

Clause 99. The method of Clause 98 wherein the composite fuselage frame is configured to provide crosswise support to the interior surface of a skin for a fuselage barrel section with a plurality of stringers, the composite fuselage frame spanning the plurality of stringers, the composite fuselage frame comprising a plurality of shear tie feet that extend toward the skin between adjacent stringers, each shear tie foot having a frame filler integrated therein during fabrication of the composite fuselage frame such that the composite fuselage frame comprises a plurality of frame fillers integrated within the plurality of shear tie feet.

Clause 100. The method of Clause 98 or 99 wherein a portion of the flange between the first mouse hole and the second mouse hole defines the shear tie foot which comprises a second predetermined thickness, wherein the first predetermined thickness of the web is defined by a first plurality of first polymer matrix composite layers formed by the plurality of second material polymer matrix composite plies, wherein the second predetermined thickness of the shear tie foot is defined by the first predetermined thickness and a second plurality of second polymer matrix composite layers formed by the plurality of first material polymer matrix composite plies that provide the frame filler integrated with the plurality of second material polymer matrix composite plies of the first predetermined thickness.

Clause 101. The method of any of Clauses 94 to 100, the fabricating of the composite fuselage frame further comprising: integrating the frame filler into the shear tie foot of the composite fuselage frame via clamped arc forming of the second stack of second material polymer matrix composite plies over the first stack of first material polymer matrix composite plies; and co-curing the frame filler provided by the first stack and the shear tie foot provided by the second stack to harden the composite fuselage frame.

Clause 102. An aircraft comprising the composite fuselage frame of any of Clauses 73 to 92.

## Claims

1. A method (2800) of fabricating a composite fuselage frame (100) for an aircraft (200), comprising:
laying up (2802) a plurality of first material polymer matrix composite plies (604) on a first portion (1504) of a top surface (1402) of a layup tool (1404) for the composite fuselage frame (100) at a predetermined location to form a first stack (1004) of first material polymer matrix composite plies (604), the predetermined location being associated with a frame filler (802) in relation to a shear tie foot (114) of the composite fuselage frame (100);
laying up (2804) a plurality of second material polymer matrix composite plies (602) over the first material polymer matrix composite plies (604) and a second portion (1510) of the top surface (1402) of the layup tool (1404) to provide a second stack (1506) of second material polymer matrix composite plies (602); and
forming (2806) the second stack (1506) and the first stack (1004).

2. The method of Claim 1 wherein the first material polymer matrix composite plies (604) comprise at least one of thermoset matrix composite plies and thermoplastic matrix composite plies.

3. The method of Claim 1 or 2 wherein the first material polymer matrix composite plies (604) comprise a reinforcement fabric and polymer matrix material.

4. The method of Claim 3 wherein:
the reinforcement fabric comprises woven reinforcement fibers that are interwoven in at least two directions; and, optionally,
the woven reinforcement fibers comprise at least one of glass fibers, carbon fibers, aramid fibers, natural fibers and polyetheretherketone fibers.

5. The method of Claim 3 or 4 wherein:
the reinforcement fabric comprises at least one of a plain weave fabric, a 0/90-degree weave fabric and a 45-degree weave fabric; and/or
the polymer matrix material comprises at least one of a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin and a polyetheretherketone resin.

6. The method of any of Claims 1 to 5 wherein the second material polymer matrix composite plies (602) comprise at least one of thermoset matrix composite plies and thermoplastic matrix composite plies.

7. The method of any of Claims 1 to 6 wherein:
the second material polymer matrix composite plies (602) comprise unidirectional reinforcement fibers and polymer matrix material; and, optionally:
the unidirectional reinforcement fibers comprise at least one of carbon fibers, glass fibers, aramid fibers, natural fibers and polyetheretherketone fibers; and/or
the polymer matrix material comprises at least one of a thermoset resin, a thermoplastic resin, an epoxy resin, a phenolic resin, a polyurethane resin, a polyimide resin, a polyethylene resin, a polypropylene resin, a polybutylene terephthalate resin, a polyamide resin, a polyphenylene a sulfide resin, a polyether imide resin, a polyetherketoneketone resin and a polyetheretherketone resin.

8. The method of any of Claims 1 to 7, further comprising:
cutting (2808) the plurality of first material polymer matrix composite plies (604) from one or more sheet of first material polymer matrix composite fabric (1202); and/or
cutting (2810) the plurality of second material polymer matrix composite plies (602) from one or more sheet of second material polymer matrix composite tape (1602).

9. The method of any of Claims 1 to 8, wherein the forming (2806) of the second stack (1506) and the first stack (1004) comprise:
forming (3902) the second stack (1506) and the first stack (1004) to a top surface (4002) of a forming tool (4004); and
compacting (3904) the second stack (1506) and the first stack (1004) to a top surface (4102) of a compacting tool (4104).

10. The method of any of Claims 1 to 9, the forming (2806) of the second stack (1506) and the first stack (1004) comprising:
forming (4202) the second stack (1506) and the first stack (1004) to the top surface (1402) of the layup tool (1404); and
compacting (4204) the second stack (1506) and the first stack (1004) during the forming (4202) to provide a laminate (1502) of the composite fuselage frame (100).

11. The method (2900) of Claim 10, further comprising:
curing (2902) the laminate (1502) of the composite fuselage frame (100) to harden the composite fuselage frame (100) wherein, after the curing (2902) of the laminate (1502), the composite fuselage frame (100) comprises a web (102) and a flange (1802), the web (102) comprising a width (103) and a first predetermined thickness (402) and forming an arc (104) between a first end (106) and a second end (108) in relation to a fuselage (202) of the aircraft (200), the width (103) extending from an outer side (404) in relation to a skin (204) on the fuselage (202) to an inner side (406), the flange (1802) disposed on the outer side (404) of the web (102) and projecting from the first predetermined thickness (402) of the web (102);
cutting (2904) a first mouse hole (110) from the flange (1802) at a first predetermined position and sized to fit over a first stringer (302) on the skin (204), the first predetermined position based on a first location of the first stringer (302) on the skin (204); and
cutting (2906) a second mouse hole (112) from the flange (1802) spaced from the first mouse hole (110) at a second predetermined position and sized to fit over a second stringer (304) adjacent to the first stringer (302) on the skin (204), the second predetermined position based on a second location of the second stringer (304) on the skin (204).

12. The method of any of Claims 1 to 11, further comprising:
integrating the frame filler (802) into the shear tie foot (114) of the composite fuselage frame (100) via clamped arc forming of the second stack (1506) of second material polymer matrix composite plies (602) over the first stack (1004) of first material polymer matrix composite plies (604); and
co-curing the frame filler (802) provided by the first stack (1004) and the shear tie foot (114) provided by the second stack (1506) to harden the composite fuselage frame (100).

13. The method (3000) of any of Claims 1 to 12, further comprising:
laying up (3002) at least one second material polymer matrix composite ply (602) on the top surface (1402) of the layup tool (1404) to provide a base portion (2002) of the composite fuselage frame (100) below the first stack (1004) of first material polymer matrix composite plies (604) and the second stack (1506) of second material polymer matrix composite plies (602) prior to the laying up (2802) of the plurality of first material polymer matrix composite plies (604) and the laying up (2804) of the plurality of second material polymer matrix composite plies (602);
after the laying up (2802) of the plurality of first material polymer matrix composite plies (604), forming (3004) the base portion (2002) and the first stack (1004) of first material polymer matrix composite plies (604) to the top surface (1402) of the layup tool (1404);
compacting (3006) the base portion (2002) and the first stack (1004) of first material polymer matrix composite plies (604) during the forming (3004) to provide a second laminate (2004) of an interim composite fuselage frame (2006); and, optionally,
cutting (3008) the at least one second material polymer matrix composite ply (602) from one or more sheet of second material polymer matrix composite tape (1602).

14. The method (3100) of any of Claims 1 to 13, further comprising:
laying up (3102) an outer protective fiberglass ply (606) on the top surface (1402) of the layup tool (1404) to provide an outer protective fiberglass layer (506) below the first stack (1004) of first material polymer matrix composite plies (604) and the second stack (1506) of second material polymer matrix composite plies (602) prior to the laying up (2802) of the plurality of first material polymer matrix composite plies (604) and the laying up (2804) of the plurality of second material polymer matrix composite plies (602);
after the laying up (2802) of the plurality of first material polymer matrix composite plies (604) and the laying up (2804) of the plurality of second material polymer matrix composite plies (602), forming (3104) the outer protective fiberglass ply (606) along with the second stack (1506) and the first stack (1004) to the top surface (1402) of the layup tool (1404); and
compacting (3106) the outer protective fiberglass ply (606) along with the second stack (1506) and the first stack (1004) during the forming (3104) to provide a laminate (1502) of the composite fuselage frame (100).

15. A composite fuselage frame (100) for an aircraft (200), comprising:
a web (102) comprising a width (103) and a first predetermined thickness (402) and forming an arc (104) between a first end (106) and a second end (108) in relation to a fuselage (202) of the aircraft (200), the width (103) extending from an outer side (404) in relation to a skin (204) on the fuselage (202) to an inner side (406); and
a shear tie foot (114) disposed on the outer side (404) of the web (102) between a first mouse hole (110) and a second mouse hole (112) and projecting from the first predetermined thickness (402) of the web (102), the shear tie foot (114) having a second predetermined thickness (408) that extends along the skin (204) of the aircraft (200) between a first stringer (302) and a second stringer (304), and
wherein the second predetermined thickness (408) of the shear tie foot (114) is defined by the first predetermined thickness (402) and a second plurality of second polymer matrix composite layers (504) formed by a plurality of first material polymer matrix composite plies (604) that provide a frame filler (802) integrated with a plurality of second material polymer matrix composite plies (602) of the first predetermined thickness (402);
or an aircraft (200) comprising such a composite fuselage frame (100).
